# EUROPÄISCHE PATENTSCHRIFT

(11) **EP 3 344 503 B1**
(45) Veröffentlichungstag und Bekanntmachung des Hinweises auf die Patenterteilung: **17.04.2019**
(21) Anmeldenummer: 16734186.6
(22) Anmeldetag: 24.06.2016
(51) Int. Cl.: B60T 13/66, B60T 13/68, B60T 17/18

(54) **ELEKTRONISCH STEUERBARES PNEUMATISCHES BREMSSYSTEM IN EINEM NUTZFAHRZEUG SOWIE VERFAHREN ZUM ELEKTRONISCHEN STEUERN EINES PNEUMATISCHEN BREMSSYSTEMS**
ELECTRONICALLY CONTROLLED PNEUMATIC BRAKING SYSTEM IN A COMMERCIAL VEHICLE, AND METHOD FOR ELECTRONICALLY CONTROLLING A PNEUMATIC BRAKING SYSTEM
SYSTÈME DE FREINAGE PNEUMATIQUE COMMANDABLE ÉLECTRONIQUEMENT DANS UN VÉHICULE UTILITAIRE AINSI QUE PROCÉDÉ DE COMMANDE D'UN SYSTÈME DE FREINAGE PNEUMATIQUE

(30) Priorität: 02.09.2015 DE 102015011296
(43) Veröffentlichungstag der Anmeldung: 11.07.2018
(73) Patentinhaber: WABCO GmbH, 30453 Hannover (DE)
(72) Erfinder: OTREMBA, Robert, 30952 Ronnenberg (DE)
(74) Vertreter: Rabe, Dirk-Heinrich
(86) Internationale Anmeldenummer: PCT/EP2016/001081
(87) Internationale Veröffentlichungsnummer: WO 2017/036569

(56) Entgegenhaltungen:
- DE-A1- 10 036 286
- DE-C1- 10 042 215
- DE-C1- 19 504 394
- US-B2- 7 520 572

## Beschreibung

Elektronisch steuerbares pneumatisches Bremssystem in einem Nutzfahrzeug sowie Verfahren zum elektronischen Steuern eines pneumatischen Bremssystems.

Die Erfindung betrifft ein elektronisch steuerbares Bremssystem in einem Nutzfahrzeug, insbesondere in einem autonom steuerbaren Nutzfahrzeug, sowie ein Verfahren zum elektronischen Steuern eines pneumatischen Bremssystems.

In Fahrzeugen, insbesondere Nutzfahrzeugen, mit einem pneumatischen Bremssystem, insbesondere ausgebildet als elektronisches Bremssystem (EBS) oder Antiblockiersystem (ABS), können zum Aussteuern von Bremsdrücken von einer Steuereinheit (ECU) elektronisch Steuerventile, beispielsweise Relaisventile oder Achsmodulatoren, angesteuert werden, die dann in Abhängigkeit einer angeforderten Fahrzeug-Soll-Verzögerung pneumatisch einen Bremsdruck an die Bremszylinder von Betriebsbremsen des Bremssystems weiterleiten. Dem elektronisch ausgesteuerten pneumatischen Bremsdruck überlagert ist die Aussteuerung eines Bremsdruckes in Abhängigkeit einer Betätigung eines Bremskraftreglers bzw. Bremswertgebers über ein Bremspedal durch den Fahrer, so dass der Fahrer in dem autonom gesteuerten Fahrzeug im Notfall auch selbst noch eine Notbremsung vollziehen kann und/oder den elektronisch ausgesteuerten Bremsdruck übersteuern kann.

Nachteilig bei bisherigen Lösungen in bekannten Fahrzeugen mit pneumatischen Bremssystemen ist, dass bei einem Ausfall der elektronischen Ansteuerung der Steuerventile keine elektronisch steuerbare Rückfallebene vorhanden ist. Die pneumatische Rückfallebene eines herkömmlichen Bremssystems funktioniert nur dann, wenn der Fahrer auch das Bremspedal betätigt. Dies ist bei einem autonom gesteuerten Fahrzeug in der Regel nicht der Fall, insbesondere wenn kein Fahrer im Fahrzeug sitzt oder der Fahrer unaufmerksam ist.

Die DE 195 04 394 C1 beschreibt ein Bremssystem, welches einen ersten Bremskreis in der Hinterachseinheit und einen zweiten Bremskreis in der Vorderachseinheit umfasst. Jeder Bremskreis weist zwei Bremszylinder und eine Steuerventileinrichtung auf, die die Bremszylinder abhängig vom Steuerdruck mit einem Druckversorgungs- oder Überdruckventil verbindet. Der Bremskreis der Vorderachseinheit weist eine Steuerventileinrichtung auf, die aus einem ersten Steuerventil für den ersten Bremszylinder dieses Kreises und einem zweiten Steuerventil für den zweiten Bremszylinder desselben Bremskreises besteht. Das erste Steuerventil kann von beiden Kreisen gesteuert werden.

Die DE 197 50 932 A1 zeigt eine Bremssteuerung für eine Hinterachse mit einem Relaisventil als Steuerventil, einem elektronisch gesteuerten Proportionalitätsventil und einem pneumatischen Bremskraftregler. Das Proportionalitätsventil und der Bremskraftregler sind über pneumatische Steuereingänge an das Relaisventil angeschlossen und übertragen einen bestimmten Steuerdruck an den Steuereingang des Relaisventils. Das Relaisventil wiederum steuert den höheren der beiden Steuerdrücke proportional als Bremsdruck an die Bremszylinder der Betriebsbremsen der Hinterachse aus. Weiterhin ist ein Bremsventil vorgesehen, dessen Stellung abhängig von der Bremspedalbetätigung durch den Fahrer ist und das den vom Relaisventil auszusteuernden Bremsdruck vorgibt. Dazu wird vom Bremsventil ein Bremsventil-Steuerdruck pneumatisch auf den Bremskraftregler und gleichzeitig über eine Steuerelektronik elektrisch über ein Steuersignal auf das Proportionalitätsventil übertragen, die dann einen entsprechenden Steuerdruck an das Relaisventil aussteuern, wobei bei ordnungsgemäßer Funktionsweise der Steuerdruck des Bremskraftreglers geringfügig niedriger eingestellt wird als der Steuerdruck des elektronisch gesteuerten Proportionalitätsventils. Bei einem elektrischen Ausfall wird dadurch eine Rückfallebene ausgebildet, denn wenn das elektronisch gesteuerte Proportionalitätsventil ausfällt oder eine Störung aufweist, ist der vom Bremskraftregler vorgegebene Steuerdruck automatisch höher und wird somit zur Bremsdruck-Aussteuerung durch das Relaisventil verwendet.

Die DE 28 18 813 C3 beschreibt eine Anordnung zum Verhindern des Durchdrehens der Räder. Hierbei wird bei Aktivierung der Anordnung ein Magnetventil geöffnet, das den Arbeitsdruck aus einem Druckvorratsbehälter freigibt, so dass dieser über ein Wegeventil an die Magnetregelventile an den Hinterrädern ausgesteuert werden kann. Das Magnetventil wird hierbei von einer Vergleichseinrichtung derartig angesteuert, dass bei einem Durchdrehen der Hinterräder beim Anfahren die Hinterräder über die Magnetregelventile abgebremst werden und dadurch die Geschwindigkeit der Hinterräder an die Geschwindigkeit der Vorderräder angepasst wird. Wird gleichzeitig ein Bremsvorgang eingeleitet, wird das Wegeventil derartig umgeschaltet, dass Bremsdruck nur noch vom Bremsventil an die Magnetregelventile geleitet wird und darüber eine Abbremsung der Räder erfolgt.

Die DE 10 2014 013 882 zeigt ein Verfahren zum Erfassen einer unbeabsichtigten pneumatischen Aktivierung eines Relaisventils, wobei das Relaisventil zum Betätigen der Betriebsbremsen vorgesehen ist und sowohl Anforderungen von einem Bremsventil als auch Anforderungen von einer Steuerung bzw. Regelung zum automatischen Bremsen entgegennimmt.

Die US 7 520 572 B2 und die EP 1 730 006 B1 zeigen ein Verfahren, bei dem das Bremsventil zusätzlich zum Bremspedal von einer elektronischen Steuereinheit betätigt werden kann. Demnach ist ein elektronisches Bremssystem vorgesehen, dessen Betriebsbremsen durch das Bremsventil und über ein zusätzliches Relaisventil angesteuert werden. Die Bremsanforderung kann zum einen über das Bremspedal auf das Bremsventil vorgegeben werden oder aber unabhängig davon über einen Bremsventilaktuator, der zwischen dem Bremspedal und dem Bremsventil angeordnet ist. Der Bremsventilaktuator wird durch die elektronische Steuereinheit gesteuert, indem bei Vorliegen eines Steuersignals zum Abbremsen des Fahrzeuges ein Regeldruck an den Bremsventilaktuator ausgesteuert wird, der beispielsweise als ein pneumatisches Ventil ausgeführt ist, so dass das Bremsventil betätigt wird.

Die US 6 659 244 B2 zeigt einen möglichen Bremsventilaktuator für die US 7 520 572 B2 oder die EP 1 730 006 B1, der zwischen dem Bremspedal und dem Bremsventil angeordnet ist und als ein pneumatischer Aktuator mit einem Kolben ausgeführt ist. Bei Vorliegen eines Regeldrucks von der elektronischen Steuereinheit hält der pneumatische Aktuator die Kolbenstange des Bremsventils in ihrer betätigten Stellung, unabhängig von der Stellung des Bremspedals, um beispielsweise eine Pre-Trip Funktionalität im Stillstand des Fahrzeuges ausbilden zu können.

Die EP 1 530 529 B1 zeigt ein Druckregelmodul für eine DruckluftBremsanlage eines Fahrzeuges. Hierbei ist vorgesehen, dass über ein Wegeventil ein die Betriebsbremse steuerndes Relaisventil angesteuert wird, wobei die Ansteuerung in Abhängigkeit eines Schlupffalls von einer ABS-Steuereinheit stattfindet. Weiterhin ist vorgesehen, eine derartige Anordnung in einem Antriebsschlupfsystem einzusetzen, indem ein weiteres Wegeventil vorgeschaltet wird, das je nach Vorliegen eines Antriebsschlupffalls den Druckluftanschluss des Wegeventils mit einem Druckvorratsbehälter verbindet, so dass der Druck an den Betriebsbremsen über das Relaisventil auch erhöht werden kann.

Die DE 10 2010 050 578 A1 zeigt eine Bremsanlage, bei der über ein Bremsventil bzw. eine Bremspedaleinrichtung eine Bremsanforderung vorgegeben wird. Diese wird in einer Steuereinrichtung in ein elektrisches Signal umgewandelt und mit dem elektrischen Signal ein Steuerventil angesteuert, das den Bremsdruck an die Betriebsbremsen aussteuert. Fällt die Elektronik aus, wird im Redundanzfall das Steuerventil pneumatisch über Druckluftleitungen vom Betriebsbremsventil angesteuert und darüber ein Bremsdruck an die Betriebsbremsen ausgesteuert. Das Steuerventil weist hierbei mehrere Magnetventile sowie ein Relaisventil auf. Die Magnetventile können je nach gewünschter Funktion über den Steuerdruck den vom Relaisventil ausgesteuerten Bremsdruck an den Betriebsbremsen erhöhen, halten oder verringern, indem das jeweilige Magnetventil bestromt wird.

Die DE 10 2013 015 949 A1 beschreibt ein Bremssystem zur Kurvenunterstützung, wobei vorgesehen ist, mit einem elektronisch gesteuerten Mehrwegeventil einen Bremsdruck an Betriebsbremsen des Bremssystems auszusteuern, wobei ein Bremsdruck auch dann ausgesteuert wird, wenn von einem ersten Bremsventil als Bremswertgeber keine Bremsanforderung vorliegt. Das Mehrwegeventil und das erste Bremsventil sind hierbei über ein Wechselventil auf ein Relaisventil geschaltet, das den Bremsdruck an die Betriebsbremsen aussteuert. Das Wechselventil gibt hierbei lediglich den höheren der beiden Drücke vom ersten Bremsventil oder dem Wechselventil an das Relaisventil, so dass die elektrische Anforderung des Mehrwegeventils durch das erste Bremsventil übersteuert werden kann.

Es ist Aufgabe der Erfindung, eine elektronisch geregelte Ansteuerung für ein pneumatisches Bremssystem sowie ein Verfahren zum elektronischen Regeln des pneumatischen Bremssystems bereitzustellen, die eine sichere und zuverlässige Bremsung in einem autonom steuerbaren Fahrzeug, insbesondere mit einer elektronischen Redundanz, gewährleisten.

Diese Aufgabe wird durch ein elektronisch steuerbares Bremssystem nach Anspruch 1 sowie ein Verfahren nach Anspruch 24 gelöst. Bevorzugte Weiterbildungen sind in den Unteransprüchen angegeben.

Erfindungsgemäß ist demnach vorgesehen, in einem elektronisch steuerbaren pneumatischen Bremssystem ein zusätzliches, elektronisch gesteuertes zweites Bremsventil anzuordnen, das zu einer elektronisch vorgegebenen Bremsanforderung einen zweiten Bremsventil-Steuerdruck aussteuern kann, welcher vorzugsweise proportional oder gepulst ausgesteuert wird. Das zusätzliche zweite Bremsventil ist hierbei parallel zu einem ersten Bremsventil, beispielsweise einem Bremswertgeber oder einem Fußbremsventil, im Bremssystem angeordnet und mit mindestens einem elektronisch und pneumatisch steuerbaren Steuerventil verbunden.

Durch den parallelen Aufbau und die elektronische Ansteuerung des zweiten Bremsventils kann bereits der Vorteil erreicht werden, dass in einem beispielsweise autonom gesteuerten Fahrzeug mit einem elektronisch gesteuerten pneumatischen Bremssystem eine elektronisch-pneumatisch steuerbare Rückfallebene ausgebildet werden kann. Denn für den Fall, dass das mindestens eine Steuerventil, das zum Bewirken einer Fahrzeug-Soll-Verzögerung von einer ersten Steuereinheit über elektrische Steuersignale elektronisch gesteuert wird, nicht angesteuert werden kann, beispielsweise aufgrund eines elektrischen Defekts bei der Signalübertragung von der ersten Steuereinheit, kann über eine zweite Steuereinheit, die auch in der ersten Steuereinheit integriert sein kann, ein elektrisches Anforderungs-Signal an das zusätzliche, zweite Bremsventil ausgegeben werden. Das zweite Bremsventil steuert in Abhängigkeit des elektrischen Anforderungs-Signals pneumatisch einen zweiten Bremsventil-Steuerdruck an das mindestens eine Steuerventil des jeweiligen Bremskreises oder direkt an die Bremszylinder der jeweiligen Betriebsbremsen aus, um die autonom angeforderte Bremsung zum Erreichen der Fahrzeug-Soll-Verzögerung dennoch zu bewirken.

Somit kann in einem autonom gesteuerten Fahrzeug vorteilhafterweise von einer rein elektronischen Ansteuerung der Steuerventile auf eine elektronisch-pneumatische Ansteuerung zurückgegriffen werden, die sonst nur durch eine Betätigung des Bremspedals durch den Fahrer gewährleistet werden kann. Hier übernimmt das zweite Bremsventil quasi elektronisch die Aufgabe einer mechanischen Bremspedalbetätigung. Somit können durch das erfindungsgemäße elektronisch steuerbare pneumatische Bremssystem vorteilhafterweise mehrere Rückfallebenen bzw. Redundanzen ausgebildet werden, falls eine elektronische Ansteuerung der Steuerventile fehlschlägt:
Eine, insbesondere erste, Rückfallebene bzw. Redundanz ist demnach durch die mechanische Betätigung des Bremspedals beispielsweise durch Drücken des Bremspedals durch den Fahrer gegeben, in dessen Abhängigkeit pneumatisch ein Steuerdruck ausgesteuert wird, d.h. eine mechanisch-pneumatische Redundanz. Ist der Fahrer unaufmerksam oder fährt das Fahrzeug autonom ohne Fahrer, wird eine weitere, insbesondere zweite, elektronisch-pneumatisch gesteuerte Rückfallebene bzw. Redundanz durch das zweite Bremsventil ausgebildet, wobei beide Rückfallebenen parallel zueinander arbeiten können.

Das mindestens eine Steuerventil ist hierbei jeweils einem Bremskreis eines Fahrzeuges, insbesondere Nutzfahrzeuges, zugeordnet und steuert Bremsdrücke an Betriebsbremsen des jeweiligen Bremskreises aus. In einem pneumatischen Bremssystem, in dem eine elektronische Ansteuerung der Betriebsbremsen lediglich an einer Fahrzeugachse, beispielsweise einer angetriebenen Hinterachse stattfindet, ist somit lediglich ein elektronisch und pneumatisch steuerbares Steuerventil vorgesehen. In einem zweikreisigen pneumatischen Bremssystem mit elektronischer Ansteuerung der Betriebsbremsen beispielsweise an einer Vorderachse und der Betriebsbremsen an der angetriebenen Hinterachse ist für jeden Bremskreis jeweils ein Steuerventil vorgesehen.

Die Fahrzeug-Soll-Verzögerung wird hierbei beispielsweise von der zweiten Steuereinheit vorgegeben, wobei die zweite Steuereinheit das Fahrzeug autonom steuert, d.h. insbesondere darüber entscheidet, mit welcher negativen Beschleunigung das Nutzfahrzeug abgebremst werden soll. Die Fahrzeug-Soll-Verzögerung wird im Normalbetrieb über ein XBR-Signal an die erste Steuereinheit übermittelt, die in Abhängigkeit davon elektronisch über das Steuersignal das mindestens eine Steuerventil ansteuert. Über das XBR-Signal wird somit eine externe Bremsanforderung von der ersten Steuereinheit an die erste Steuereinheit übertragen. Statt der Fahrzeug-Soll-Verzögerung kann von der zweiten Steuereinheit auch ein Solldruck oder eine Pulszeit zum gepulsten Ansteuern der Steuerventile vorgegeben werden. Kann das XBR-Signal nicht an die erste Steuereinheit übertragen werden oder aber das Steuersignal nicht an das mindestens eine Steuerventil, so tritt der, insbesondere zweite, Redundanzfall ein, in dem die zweite Steuereinheit das zweite Bremsventil über das Anforderungs-Signal entsprechend ansteuert zum redundanten Durchsetzen der Fahrzeug-Soll-Verzögerung. Über das Anforderungs-Signal können statt der Fahrzeug-Soll-Verzögerung auch ein Solldruck oder eine Pulszeit zum gepulsten Ansteuern des zweiten Bremsventils vorgegeben werden.

Um entweder die Bremsanforderung von dem ersten Bremsventil oder die autonome Bremsanforderung von dem zweiten Bremsventil über den Bremsventil-Steuerdruck an das Steuerventil auszugeben, kann zwischen den Bremsventilen und dem mindestens einen Steuerventil mindestens ein zusätzliches Wechselventils vorgesehen sein, das im Redundanzfall vorteilhafterweise eine Fahrerbremsung ermöglicht: Falls der Fahrer das Bremspedal während einer Ansteuerung des zweiten Bremsventils, d.h. im Redundanzfall, so stark betätigt, dass ein durch das erste Bremsventil aufgrund der Fahrerbetätigung ausgesteuerter erster Bremsventil-Steuerdruck größer ist als der vom zweiten Bremsventil elektronisch angeforderte zweite Bremsventil-Steuerdruck, der durch die autonome Bremsung vorgegeben wird, steuert das mindestens eine Wechselventil diesen höheren ersten Bremsventil-Steuerdruck aus. Denn das mindestens eine Wechselventil ist derartig ausgebildet, dass lediglich der höhere der anliegenden Bremsventil-Steuerdrücke als Steuerdruck an das mindestens eine Steuerventil des jeweiligen Bremskreises weitergeleitet wird, d.h. in dem Fall wird die Bremsanforderung vom Fahrer an das mindestens eine Steuerventil ausgegeben; die autonome Bremsung wird somit überschrieben bzw. durch den Fahrer übersteuert. Der Fahrer kann in den Bremsvorgang eingreifen, beispielsweise während einer Notbremssituation.

Das mindestens eine Wechselventil kann hierbei auch in dem mindestens einen Steuerventil, einem ersten Bremsventil oder einem zweiten Bremsventil bereits integriert sein, um vorteilhafterweise eine Druckübertragung über kurze Wege zu erreichen.

Das mindestens eine Wechselventil kann hierbei als ein pneumatisches Wechselventil ausgeführt sein, das pneumatisch gesteuert den höheren anliegenden Bremsventil-Steuerdruck durchlässt, oder aber als elektrisch gesteuertes Wechselventil, beispielsweise als 3/2-Wegeventil, das entsprechend elektronisch gesteuert den höheren der beiden Bremsventil-Steuerdrücke an das mindestens eine Steuerventil, insbesondere gepulst, aussteuert. Es sind aber auch andere Schaltventile denkbar, die eine derartige Funktionalität aufweisen. Beispielsweise kann das 3/2-Wegeventil elektronisch gesteuert statt gepulst auch dauerhaft in einem geöffneten Zustand gehalten werden, so dass ein maximaler oder ein mittlerer vorgegebener Bremsdruck vom Steuerventil ausgegeben werden kann.

Alternativ kann das Wechselventil auch entfallen, so dass sowohl das erste Bremsventil als auch das zweite Bremsventil beispielsweise über ein T-Stück mit dem mindestens einen Steuerventil verbunden sind. Somit werden sowohl der erste Bremsventil-Steuerdruck vom ersten Bremsventil als auch der zweite Bremsventil-Steuerdruck vom zweiten Bremsventil gleichzeitig an das mindestens eine Steuerventil übertragen, wobei das Steuerventil dann pneumatisch mit der Summe oder einem Mittelwert der beiden Steuerdrücke angesteuert wird. Auch dann können eine Fahrerbremsung über das erste Bremsventil und eine elektronisch gesteuerte Bremsung über das zweite Bremsventil im Redundanzfall erreicht werden.

Das zweite Bremsventil ist beispielsweise als 1-Kanal Proportionalitätsventil ausgeführt, so dass ein zur Fahrzeug-Soll-Verzögerung vorzugsweise proportionaler zweiter Bremsventil-Steuerdruck an den mindestens einen Bremskreis des Fahrzeugs ausgegeben werden kann. Dazu kann für das zweite Bremsventil beispielsweise ein 1-Kanal-Proportionalitätsventil verwendet werden, das beispielsweise wie ein herkömmlicher 1-Kanal-Achsmodulator funktioniert, der einen zum Steuerdruck proportionalen Bremsdruck an eine Betriebsbremse einer Fahrzeugachse aussteuert. In dem Fall kann der 1-Kanal-Achsmodulator also derartig als zweites Bremsventil eingesetzt werden, dass das von der zweiten Steuereinheit vorgegebene elektrische Anforderungs-Signal - analog zu dem Steuerdruck - proportional als zweiter Bremsventil-Steuerdruck an das mindestens eine Wechselventil des jeweiligen Bremskreises ausgesteuert wird.

Im Falle eines zweikreisig elektronisch gesteuerten Bremssystems kann das zweite Bremsventil vorteilhafterweise als 2-Kanal Proportionalitätsventil ausgeführt sein, so dass ein zur Fahrzeug-Soll-Verzögerung vorzugsweise proportionaler zweiter Bremsventil-Steuerdruck an beide Bremskreise ausgegeben werden kann. Dazu kann beispielsweise ein 2-Kanal-Proportionalitätsventil verwendet werden, das beispielsweise wie ein herkömmlicher 2-Kanal-Achsmodulator funktioniert, der einen zum Steuerdruck proportionalen Bremsdruck an zwei Betriebsbremsen einer Fahrzeugachse aussteuert. In dem Fall kann der 2-Kanal-Achsmodulator also derartig eingesetzt werden, dass das von der zweiten Steuereinheit vorgegebene elektrische Anforderungs-Signal - analog zu dem Steuerdruck - proportional als zweiter Bremsventil-Steuerdruck an die Wechselventile des ersten und des zweiten Bremskreis ausgesteuert wird. Es ist aber auch möglich, in einem zweikreisigen Bremssystem zwei 1-Kanal-Proportionalitätsventile, die jeweils von der zweiten Steuereinheit mit dem Anforderungs-Signal angesteuert werden, zu verwenden, die auch in den entsprechenden Steuerventilen integriert sein können, um vorteilhafterweise kurze Übertragungswege zu erhalten.

Alternativ kann das zusätzliche zweite Bremsventil aber auch als ein Wegeventil, insbesondere als ein 3/2-Wegeventil ausgeführt sein, das von der zweiten Steuereinheit beispielsweise gepulst über eine Pulszeit elektronisch angesteuert werden kann. In dem Fall wird das 3/2-Wegeventil über die Pulszeit so lange geöffnet, bis ein der vorgegebenen Fahrzeug-Soll-Verzögerung proportionaler zweiter Bremsventil-Steuerdruck ausgesteuert wird. Alternativ kann das 3/2-Wegeventil statt gepulst auch dauerhaft geöffnet werden, um einen maximalen, dem Vorratsdruck entsprechenden zweiten Bremsventil-Steuerdruck auszusteuern und somit eine maximalen Bremsdruck vorzugeben.

Das als 3/2-Wegeventil ausgeführte zweite Bremsventil kann in einer weiteren bevorzugten Ausführungsform gleichzeitig auch die Funktionalität des Wechselventils übernehmen, d.h. im Redundanzfall wird das zweite Bremsventil von der zweiten Steuereinheit derartig elektronisch angesteuert, dass der zweite Bremsventil-Steuerdruck gepulst an das mindestens eine Steuerventil durchgelassen wird. Wird erkannt, dass im Notbremsfall auch das erste Bremsventil betätigt wird, wird stattdessen durch die Wechselventilfunktion des zweiten Bremsventils der erste Bremsventil-Steuerdruck an das mindestens eine Steuerventil durchgelassen, wobei dies beispielsweise ebenfalls von der zweiten Steuereinheit gesteuert werden kann.

Dadurch kann ein vereinfachter Aufbau mit weniger Verkabelung und weniger Bauteilen verwendet werden, wodurch der Montage- und Kostenaufwand minimiert werden kann.

Ebenso ist das erste Bremsventil bzw. der Bremswertgeber vorzugsweise ebenfalls als Proportionalitätsventil ausgeführt. Dadurch kann ein kontrolliertes Ansteuern des mindestens einen Steuerventils durch den von dem jeweiligen Wechselventil weitergeleiteten Steuerdruck stattfinden. Alternativ ist aber auch ein als Wegeventil, insbesondere 3/2-Wegeventil ausgeführtes erstes Bremsventil möglich, das gepulst einen entsprechenden ersten Bremsventil-Steuerdruck aussteuert. Vorzugsweise kann das erste Bremsventil auch als ein elektro-mechanisches Bremsventil ausgeführt sein, dass beispielsweise von der ersten oder zweiten Steuereinheit elektronisch betätigt werden kann, so dass vorteilhafterweise eine zusätzliche Redundanz ausgebildet werden kann.

Somit sind zum Ausbilden der beiden Rückfallebenen in einem vorhandenen elektronischen Bremssystem in dem mindestens einen Bremskreis lediglich ein zweites Bremsventil, beispielsweise ein Proportionalitätsventil oder ein, insbesondere gepulst, angesteuertes Wegeventil sowie ein Wechselventil oder ein T-Stück nachzurüsten, wobei für einen Bremskreis ein 1-Kanal-Proportionalitätsventil oder ein 1-Kanal-Wegeventil, vorzugsweise ein 3/2-Wegeventil, und für mindestens zwei Bremskreise ein 2-Kanal-Proportionalitätsventil oder ein 2-Kanal-Wegeventil, vorzugsweise gebildet aus zwei 3/2-Wegeventilen, zum Steuern beider Bremskreise eingesetzt werden kann. Die zweite Steuereinheit kann entsprechend mit einer Software nachgerüstet werden, die bei Erkennen eines Defekts oder eines Ausfalls in der Elektronik der ersten Steuereinheit zum Ansteuern der Steuerventile ein elektrisches Anforderungs-Signal an das zweite Bremsventil übermittelt. In dem mindestens einen Steuerventil kann dann über eine entsprechend integrierte Redundanzfunktion von einer elektronischen Ansteuerung zu einer pneumatischen Ansteuerung gewechselt werden, so dass das mindestens eine Steuerventil nicht mehr durch die elektrischen Steuersignale sondern durch die beispielsweise von den Wechselventilen ausgesteuerten Steuerdrücke vorzugsweise durch ein im Steuerventil integriertes Steuer-Relaisventil proportional gesteuert werden kann.

Somit können vorteilhafterweise mit einfach Mitteln und mit wenig Aufwand in einem vorhandenen elektronisch gesteuerten pneumatischen Bremssystem zwei Rückfallebenen, eine elektrisch-pneumatische und eine mechanisch-pneumatische Rückfallebene, ausgebildet werden, indem lediglich eine Nachrüstung von wenigen Komponenten stattfindet.

Das mindestens eine Steuerventil ist beispielsweise als ein proportional steuerndes Relaisventil oder als ein Achsmodulator ausgeführt, wobei das Relaisventil beispielsweise für den ersten Bremskreis an der Vorderachse und der Achsmodulator für den zweiten Bremskreis an der angetriebenen Hinterachse vorgesehen sein können. Alternativ können auch Achsmodulatoren an beiden Fahrzeugachsen, z.B. an der Vorderachse ein 1-Kanal-Achsmodulator und an der Hinterachse ein 2-Kanal-Achsmodulator verwendet werden. Beide Steuerventile ermöglichen es insbesondere im Redundanzfall, proportional zu einem anliegenden Steuerdruck, der beispielsweise vom jeweiligen Wechselventil ausgesteuert wird, einen Bremsdruck auszusteuern. Das erste und das zweite Bremsventil steuern dann in dem jeweiligen Bremskreis als Bremsventil-Steuerdrücke einen Bremsventil-Relaisventil-Steuerdruck für den ersten Bremskreis und einen Bremsventil-Achsmodulator-Steuerdruck für den zweiten Bremskreis insbesondere an das jeweilige Wechselventil im entsprechenden Bremskreis aus.

Im normalen Betrieb des Fahrzeuges können beide Steuerventile auch elektrisch über Steuersignale von der ersten Steuereinheit angesteuert werden, um eine beispielsweise von der zweiten Steuereinheit autonom angeforderte Fahrzeug-Soll-Verzögerung zu erreichen oder aber im Notfall auch eine vom Fahrer manuell über das erste Bremsventil vorgegebene Fahrzeug-Soll-Verzögerung zu erreichen. Dazu kann bei einer manuellen Betätigung des ersten Bremsventils durch den Fahrer ein Betätigungs-Signal an die erste Steuereinheit ausgegeben werden, die dann eine entsprechende Fahrzeug-Verzögerung elektrisch als Steuersignal an die Steuerventile ausgibt.

Alternativ können als Steuerventile auch Wegeventile, insbesondere 3/2-Wegeventile vorgesehen sein, die im Redundanzfall beispielsweise von der zweiten Steuereinheit gepulst angesteuert werden, um einen zum Steuerdruck proportionalen Bremsdruck an die Betriebsbremsen auszugeben.

Mit dieser Ausführung der Steuerventile kann das erfindungsgemäße pneumatische Bremssystem auch ein pneumatisches Bremssystem mit AntiBlockierfunktion, im Folgenden ABS-Bremssystem genannt, sein. Vorteilhafterweise werden dazu in dem ABS-Bremssystem als Steuerventile für jede Fahrzeugachse ein pneumatisch ansteuerbares Relaisventil verwendet, das neben der pneumatischen Aussteuerung über das erste Bremsventil, insbesondere in Form eines Bremswertgebers oder eines Fußbremsventils, zusätzlich auch über ein elektronisch steuerbares 3/2-Wegeventil angesteuert werden kann. Somit kann die erfindungsgemäße Redundanz mit denselben Vorteilen wie bei einem EBS-Bremssystem auch in einem ABS-Bremssystem ausgebildet werden, indem bei einem Ausfall der elektronischen Ansteuerung des Steuerventils über das 3/2-Wegeventil auf einen Steuerdruck für die pneumatische Ansteuerung des Steuerventils über das Relaisventil zurückgegriffen werden kann.

Somit können mit dem erfindungsgemäßen Bremssystem sowohl in einem EBS-Bremssystem als auch in einem ABS-Bremssystem mit jeweils elektronisch angesteuerten Steuerventilen insbesondere eine elektrisch-pneumatische und eine mechanisch-pneumatische Rückfallebene ausgebildet werden, um die Betriebsbremsen mit einem Bremsdruck zu versorgen, und somit bei einer autonomen Bremsung auch in einem ABS-Bremsschlupffall reagieren zu können, wenn die elektronische Ansteuerung ausfällt. Ggf. können dann auch weitere redundante Sensoren zum Erkennen des ABS-Bremsschlupffalls im Fahrzeug vorgesehen sein.

Das erfindungsgemäße Bremssystem kann auch mehr als zwei Bremskreise aufweisen, beispielsweise kann das Bremssystem für ein dreiachsiges Zugfahrzeug vorgesehen sein, wobei dann drei Bremskreise vorgesehen sind, in denen jeweils unabhängig voneinander Bremsdrücke eingestellt werden können. Dementsprechend sind dann drei Wechselventile - in jedem Bremskreis ein Wechselventil - und beispielsweise ein 3-Kanal-Proportionalitätsventil oder drei 1-Kanal-Proportionalitätsventile als zweites Bremsventil zu verwenden.

Weiterhin können auf derartige Weise auch Anhänger-Bremskreise in einem Anhänger elektrisch und pneumatisch gesteuert werden, wobei die Bremsanforderung elektronisch beispielsweise über eine Anhängerschnittstelle und pneumatisch über ein elektropneumatisches Anhängersteuerventil auf den Anhänger übertragen werden kann. Ein dem Anhänger-Bremskreis zugeordneter pneumatischer Anhänger-Steuerdruck kann somit über das Anhängersteuerventil auf den Anhänger übermittelt werden und von Anhänger-Steuerventilen in die entsprechenden Bremsdrücke umgesetzt werden. um auch im Anhänger-Bremskreis im Redundanzfall eine Bremsung bewirken zu können. Als Anhänger-Steuerdruck kann hierbei beispielsweise der Steuerdruck für einen der Bremskreise des Fahrzeuges, vorzugsweise des ersten Bremskreises an der Vorderachse, verwendet werden. Alternativ kann der Anhänger-Steuerdruck auch unabhängig von den anderen Bremskreisen vorgegeben werden.

Die Erfindung wird im Folgenden anhand der beiliegenden Zeichnung erläutert. Es zeigen:
- Fig. 1a,b: ein Fahrzeug mit einem elektronisch gesteuerten pneumatischen Bremssystem als Blockschaltbild;
- Fig. 2: ein Fahrzeug mit einem elektronisch gesteuerten pneumatischen Bremssystem als Blockschaltbild gemäß einer alternativen Ausführungsform;
- Fig. 3: ein Fahrzeug mit einem elektronisch gesteuerten pneumatischen Bremssystem mit ABS-Regelung als Blockschaltbild;
- Fig. 4: einen 2-Kanal-Achsmodulator als Steuerventil;
- Fig. 5: einen 2-Kanal-Achsmodulator als zweites Bremsventil; und
- Fig. 6: eine alternative Ausführungsform eines 2-Kanal-Achsmodulators als zweites Bremsventil.

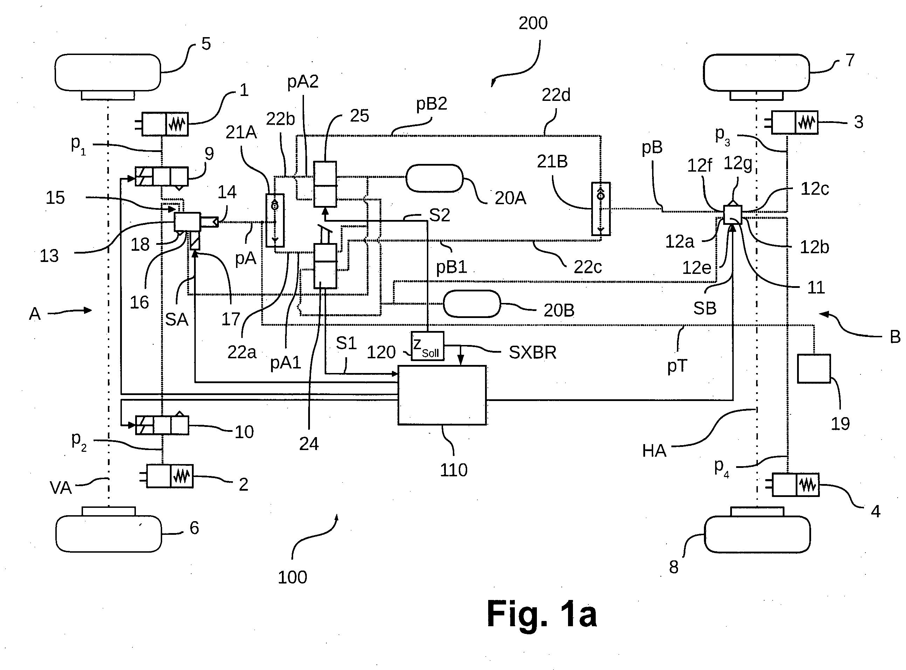

Die Ausführungsform gemäß Fig. 1a betrifft ein pneumatisches Bremssystem 100 in einem Nutzfahrzeug 200, das elektronisch gesteuert wird, mit Betriebsbremsen 1, 2, 3, 4 an den Rädern 5, 6, 7, 8. Den Betriebsbremsen 1, 2 vorgeschaltet sind an den Rädern 5, 6 einer Vorderachse VA jeweils herkömmliche ABS-Bremsventile 9, 10 zum Regeln eines Bremsdruckes p1, p2 in Abhängigkeit eines erkannten ABS-Schlupffalls. An den angetriebenen Rädern 7, 8 einer Hinterachse HA ist den Betriebsbremsen 3, 4 gemäß dieser Ausführungsform ein Achsmodulator 11 vorgeschaltet, der in bekannter Weise den an die einzelnen Betriebsbremsen 3, 4 ausgesteuerten Bremsdruck p3, p4 elektronisch und pneumatisch regeln kann und dabei einen Schlupffall an den Hinterrädern 7, 8 berücksichtigen kann. Elektronisch gesteuert werden der Achsmodulator 11 und auch die ABS-Bremsventile 9, 10 über eine erste Steuereinheit 110. Es können aber auch separate Steuereinheiten für den Achsmodulator 11 und/oder die ABS-Bremsventile 9, 10 vorgesehen sein, die die jeweiligen Ventile 9, 10, 11 einzeln ansteuern.

Die Betriebsbremsen 1, 2, 3, 4 werden gemäß der dargestellten Ausführungsform in zwei Bremskreisen A, B angesteuert, wobei ein erster Bremskreis A die Betriebsbremsen 1, 2 an den Rädern 5, 6 der Vorderachse VA und ein zweiter Bremskreis B die Betriebsbremsen 3, 4 an den Rädern 7, 8 der Hinterachse HA betrifft. Der erste Bremskreis A weist hierbei als erstes Steuerventil ein Relaisventil 13 auf, das einen pneumatisch ausgeführten ersten Relaisventil-Steuereingang 14 und einen elektrisch ausgeführten zweiten Relaisventil-Steuereingang 17, Relaisventil-Arbeitsanschlüsse 15 sowie einen Relaisventil-Druckluftanschluss 16 aufweist. Die Relaisventil-Arbeitsanschlüsse 15 sind über Druckluftleitungen mit den beiden Betriebsbremsen 1, 2 der Vorderachse VA verbunden. Der Relaisventil-Druckluftanschluss 16 verbindet das Relaisventil 13 mit einem ersten Druckvorratsbehälter 20A für den ersten Bremskreis A.

Das Relaisventil 13 steuert je nach anliegendem Relaisventil-Steuerdruck pA am ersten Relaisventil-Steuereingang 14 oder anliegendem Relaisventil-Steuersignal SA am zweiten Relaisventil-Steuereingang 17 die Bremsdrücke p1, p2 an die Betriebsbremsen 1, 2 der Vorderachse VA aus, wobei das Relaisventil 13 die Druckluft aus dem ersten Druckvorratsbehälter 20A proportional zum Relaisventil-Steuerdruck pA oder dem Relaisventil-Steuersignal SA an die Betriebsbremsen 1, 2 der Vorderachse VA aussteuert. Über das Relaisventil 13 kann weiterhin proportional zum jeweiligen Relaisventil-Steuerdruck pA oder dem Relaisventil-Steuersignal SA eine Entlüftung der Betriebsbremsen 1, 2 der Vorderachse VA zum Drucksenken stattfinden, beispielsweise über einen Relaisventil-Entlüftungsanschluss 18.

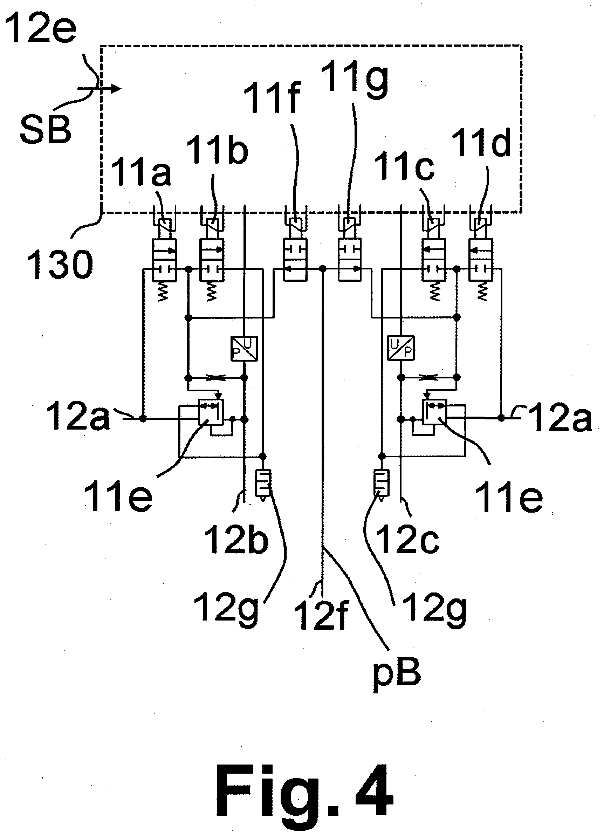

Für den zweiten Bremskreis B ist als zweites Steuerventil der Achsmodulator 11 vorgesehen, der in schematischer Form in Fig. 4 dargestellt ist. Demnach weist der Achsmodulator 11 ein erstes Einlassventil 11a, ein erstes Auslassventil 11b, ein zweites Auslassventil 11c und ein zweites Einlassventil 11d auf, die jeweils als elektronisch gesteuerte Magnetventile ausgeführt sind. Über das erste Einlassventil 11a und das erste Auslassventil 11b wird der an der linken Hinterrad-Betriebsbremse 4 ausgesteuerte Bremsdruck p4 und über das zweite Einlassventil 11d und das zweite Auslassventil 11c der an der rechten Hinterrad-Betriebsbremse 3 ausgesteuerte Bremsdruck p3 gesteuert. Beide Bremsdrücke p3, p4 werden hierbei gemäß dieser Ausführung pneumatisch unabhängig voneinander geregelt.

Sind die Einlassventile 11a, 11d geöffnet und die Auslassventile 11b, 11c geschlossen, so wird der entsprechende Bremsdruck p3 bzw. p4 erhöht, indem der an einem Achsmodulator-Druckluftanschluss 12a bereitgestellte pneumatische Arbeitsdruck aus einem zweiten Druckvorratsbehälter 20B in entsprechender Höhe über ein Achsmodulator-Relaisventil 11e proportional an Achsmodulator-Arbeitsanschlüsse 12c bzw. 12b ausgesteuert wird, wobei ein erster Achsmodulator-Arbeitsanschluss 12c über Druckluftleitungen mit der rechten Hinterrad-Betriebsbremse 3 verbunden ist und ein zweiter Achsmodulator-Arbeitsanschluss 12b mit den linken Hinterrad-Bremsen 4. Sind die Einlassventile 11a, 11d geschlossen und die Auslassventile 11b, 11c geöffnet, so kann der entsprechende Bremsdruck p3 bzw. p4 durch Entlüftung über einen Achsmodulator-Entlüftungsanschluss 12g verringert werden. Sind die Einlassventile 11a, 11d und die Auslassventile 11b, 11c gesperrt, so wird der Bremsdruck p3, p4 gehalten.

Die Vorgabe zum Druckerhöhen, Druckhalten oder Drucksenken und somit die Stellung der Einlass- und Auslassventile 11a, 11b, 11c, 11d kann von der Achsmodulator-Elektronik 130 des Achsmodulators 11 gesteuert werden, wobei die erste Steuereinheit 110 über einen ersten Achsmodulator-Steuereingang 12e elektronisch ein Achsmodulator-Steuersignal SB vorgibt, das den auszusteuernden Bremsdruck p3, p4 bestimmt, so dass beispielsweise eine Fahrzeug-Soll-Verzögerung zSoll umgesetzt oder auf einen ABS-Bremsschlupffalls reagiert werden kann.

Weiterhin sind im Achsmodulator 11 Redundanzventile 11f, 11g vorgesehen, die ebenfalls elektronisch gesteuert werden können und ebenfalls als Magnetventile ausgeführt sind. Sobald ein Ausfall oder ein Defekt in der Achsmodulator-Elektronik 130 vorliegt, werden die Redundanzventile 11f, 11g automatisch geöffnet und gleichzeitig die Einlassventile 11a, 11d und die Auslassventile 11b, 11c geschlossen, beispielsweise durch eine entsprechende Federvorspannung der Magnetventile 11a, 11b, 11c, 11d, 11f, 11g, so dass diese bei einem Ausfall automatisch mechanisch in die entsprechende Stellung gebracht werden, die auch in Fig. 4 dargestellt ist. Die Achsmodulator-Relaisventile 11e steuern dann den Bremsdruck p3, p4 nicht mehr in Abhängigkeit des elektrisch vorgegebenen Achsmodulator-Steuersignals SB aus, sondern in Abhängigkeit eines an einem zweiten Achsmodulator-Steuereingang 12f vorherrschenden pneumatischen Achsmodulator-Steuerdrucks pB, der durch Öffnen der Redundanzventile 11f, 11g proportional über die Achsmodulator-Relaisventile 11e an die Achsmodulator-Arbeitsanschlüsse 12b, 12c weitergeleitet wird. Dadurch kann auf eine pneumatische Rückfallebene zurückgegriffen werden. Der Achsmodulator-Steuerdruck pB kann hierbei von einem ersten Bremsventil 24 beispielsweise durch eine manuelle Betätigung eines Bremspedals durch den Fahrer oder von einem zweiten Bremsventil 25 durch eine redundante elektronische Steuerung vorgegeben werden.

Alternativ kann auch ein 1-Kanal-Achsmodulator als erstes Steuerventil 13 vorgesehen sein, das dann entsprechend nur einen Achsmodulator-Arbeitsanschluss 12b oder 12c aufweist, an dem ein Bremsdruck p1, p2 an beide Betriebsbremsen 1, 2 der Vorderachse VA ausgesteuert wird, der proportional zum (Relaisventil-)Steuerdruck pA ist.

Der Relaisventil-Steuerdruck pA bzw. der Achsmodulator-Steuerdruck pB für das Relaisventil 13 bzw. den Achsmodulator 11 im ersten bzw. im zweiten Bremskreis A, B werden im Redundanzfall gemäß dieser Ausführungsform der Erfindung von einem dem jeweiligen Bremskreis A, B zugeordneten pneumatisch gesteuerten Wechselventil 21A, 21B ausgegeben. Ein erstes Wechselventil 21A ist hierbei über eine erste Druckluftleitung 22a mit dem ersten Bremsventil 24 und über eine zweite Druckluftleitung 22b mit dem zweiten Bremsventil 25 pneumatisch verbunden. Das zweite Wechselventil 21B ist dementsprechend über eine dritte Druckluftleitung 22c mit dem ersten Bremsventil 24 und über einer vierte Druckluftleitung 22d mit dem zweiten Bremsventil 25 verbunden. Alternativ kann das erste Wechselventil 21A auch in dem Relaisventil 11 und das zweite Wechselventil 21B in dem Achsmodulator 13 angeordnet sein, um die Steuerdrücke pA, pB über einen kürzeren Weg übertragen zu können.

Das erste Bremsventil 24 steuert hierbei über die erste Druckluftleitung 22a einen ersten Bremsventil-Relaisventil-Steuerdruck pA1 für den ersten Bremskreis A und über die dritte Druckluftleitung 22c einen zweiten Bremsventil-Achsmodulator-Steuerdruck pB1 für den zweiten Bremskreis B aus, während das zweite Bremsventil 25 über die zweite Druckluftleitung 22b einen zweiten Bremsventil-Relaisventil-Steuerdruck pA2 für den ersten Bremskreis A und über die vierte Druckluftleitung 22d einen zweiten Bremsventil-Achsmodulator-Steuerdruck pB2 für den zweiten Bremskreis B aussteuert.

Die beiden Wechselventile 21A, 21B funktionieren derartig, dass sie jeweils den höheren der beiden Bremsventil-Relaisventil-Steuerdrücke pA1 oder pA2 bzw. den höheren der beiden Bremsventil-Achsmodulator-Steuerdrücke pB1 oder pB2 durchlassen. Somit wird das Relaisventil 13 bzw. der Achsmodulator 11 im Redundanzfall entweder vom ersten Bremsventil 24 oder vom zweiten Bremsventil 25 pneumatisch angesteuert je nachdem, welches Bremsventil 24, 25 die höhere Bremsanforderung vorgibt.

Somit kann den Betriebsbremsen 1, 2, 3, 4 an der Vorderachse VA und der Hinterachse HA über die beiden Wechselventile 21A, 21B pneumatisch unabhängig voneinander einen Bremsdruck p1, p2, p3, p4 vorgegeben werden. Zum Bereitstellen des Bremsventil-Relaisventil-Steuerdruckes pA1, pA2 bzw. des Bremsventil-Achsmodulator-Steuerdruckes pB1, pB2 sind die Bremsventile 24, 25 jeweils an die Druckvorratsbehälter 20A, 20B angekoppelt.

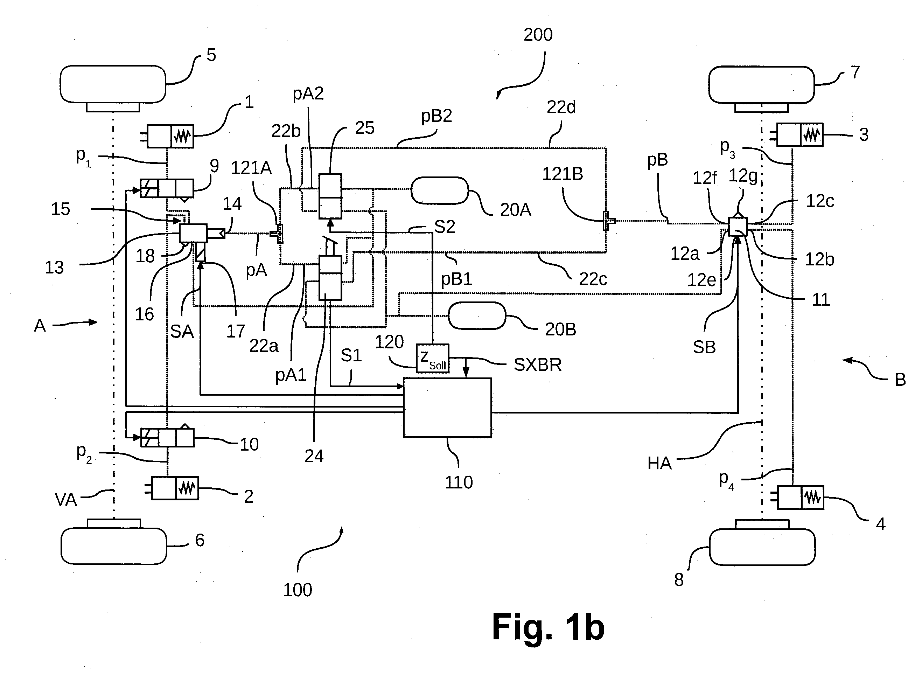

Alternativ kann gemäß Fig. 1b vorgesehen sein, statt den Wechselventilen 21A, 21B jeweils ein T-Stück 121A, 121B zu verwenden, das den jeweiligen ersten Bremsventil-Steuerdruck pA1, pB1 sowie den jeweiligen zweiten Bremsventil-Steuerdruck pA2, pB2 gleichzeitig zum jeweiligen Steuerventil 13, 11 durchlässt, so dass als Steuerdrücke pA, pB eine Summe pSA, pSB, d.h. pSA = pA1 + pA2 bzw. pSB = pB1 + pB2 oder ein Mittelwert MSA, MSB, d.h. MSA = (pA1 + pA2)/2 bzw. MSB = (pB1 + pB2)/2 an das jeweilige Steuerventil 13 ausgesteuert wird. D.h. ein erstes T-Stück 121A im ersten Bremskreis A steuert den Relaisventil-Steuerdruck pA = pSA = pA1 + pA2 oder MSA = (pA1 + pA2)/2 an das Relaisventil 13 aus und ein zweites T-Stück 121B im zweiten Bremskreis B einen Achsmodulator-Steuerdruck pB = pSB = pB1 + pB2 oder MSB = (pB1 + pB2)/2 an den Achsmodulator 11. Auch dadurch kann eine vereinfachte Redundanzfunktion bei einer Betätigung des Bremspedals erreicht werden.

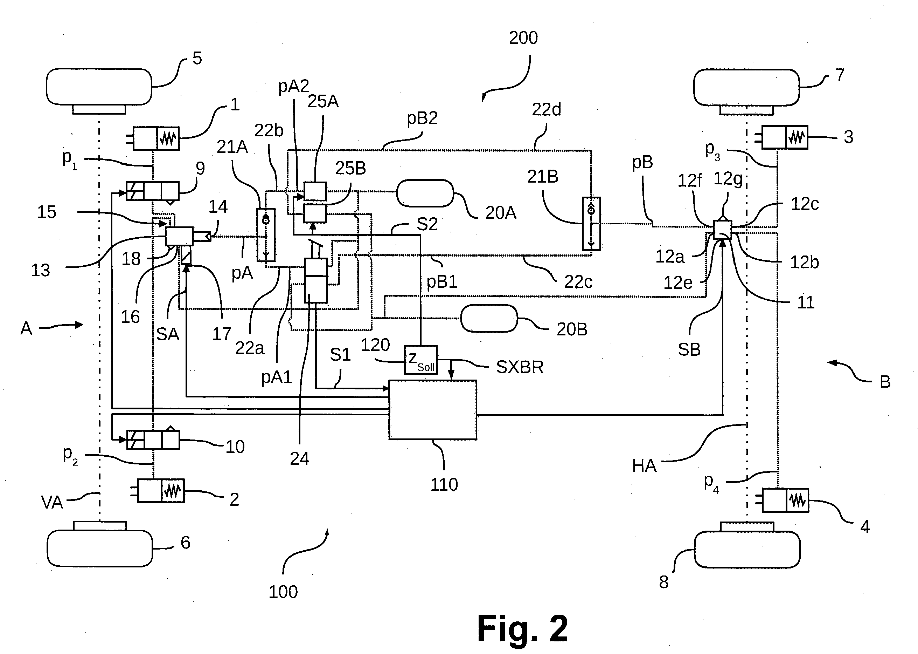

Die Steuerung des Bremssystems 100 kann hierbei folgendermaßen stattfinden:
Da es sich gemäß Fig. 1a, 1b und 2 um ein elektronisch gesteuertes, pneumatisches Bremssystem 100 (EBS) handelt, werden das Relaisventil 13 und der Achsmodulator 11 im normalen Betrieb des Fahrzeuges 200 elektrisch von der ersten Steuereinheit 110 angesteuert, indem dem Relaisventil 13 über den zweiten Relaisventil-Steuereingang 17 elektrisch das Relaisventil-Steuersignal SA übermittelt wird, das dann einen entsprechenden Bremsdruck p1, p2 an die Betriebsbremsen 1, 2 der Vorderachse VA aussteuert. Dem Achsmodulator 11 wird über den ersten Achsmodulator-Steuereingang 12e elektrisch das Achsmodulator-Steuersignal SB übermittelt, das dann gemäß obigen Ausführungen über die Einlassventile 11a, 11d und die Auslassventile 11b, 11c den entsprechenden Bremsdruck p3, p4 an den Betriebsbremsen 3, 4 der Hinterachse HA einstellt. Im normalen Betrieb sind die Redundanzventile 11f, 11g geschlossen.

Vorgegeben werden das Relaisventil-Steuersignal SA bzw. das Achsmodulator-Steuersignal SB vorzugsweise von der ersten Steuereinheit 110 in Abhängigkeit einer Fahrzeug-Soll-Verzögerung zSoll. Diese kann entweder von einem durch eine zweite Steuereinheit 120 gesteuerten elektronischen Regelsystem, das ausgebildet ist, das Fahrzeug 200 autonom zu steuern, über das XBR-Signal SXBR vorgegeben werden oder aber vom ersten Bremsventil 24, das beispielsweise als ein Bremswertgeber ausgeführt ist, der in Abhängigkeit einer Bremspedalbetätigung durch einen Fahrer ein entsprechendes Betätigungs-Signal S1 an die erste Steuereinheit 110 übermitteln kann. Diese erzeugt daraus das entsprechende Relaisventil-Steuersignal SA für den ersten Bremskreis A und das Achsmodulator-Steuersignal SB für den zweiten Bremskreis B zum Bewirken der vom Fahrer vorgegebenen Fahrzeug-Soll-Verzögerung, so dass das autonom gesteuerte Fahrzeug 200 beispielsweise in einer Notbremssituation auch manuell durch den Fahrer abgebremst werden kann.

Bei einem Ausfall der Elektronik, d.h. für den Fall, dass die erste Steuereinheit 110 von der zweiten Steuereinheit 120 das XBR-Signal SXBR nicht mehr empfängt und somit das Relaisventil 13 und/oder den Achsmodulator 11 nicht mehr ansteuern kann oder das Relaisventil-Steuersignal SA und/oder das Achsmodulator-Steuersignal SB fehlerhaft sind, kann im jeweiligen Bremskreis A, B auf die pneumatische Rückfallebene zurückgegriffen werden, d.h. zum Steuern des Relaisventils 13 bzw. des Achsmodulators 11 werden der Relaisventil-Steuerdruck pA bzw. der Achsmodulator-Steuerdruck pB zum Aussteuern der Bremsdrücke p1, p2 bzw. p3, p4 verwendet und somit von den elektronischen Steuereingängen 17, 12e auf die pneumatischen Steuereingänge 14, 12f des jeweiligen Steuerventils 11, 13 übergegangen. Dies geschieht wie bereits beschreiben beispielsweise durch entsprechende federvorgespannte Redundanzventile, so dass bei einem Ausfall der Elektronik mechanisch von einer elektronischen Ansteuerung auf eine pneumatische Ansteuerung umgeschaltet werden kann.

Zum pneumatischen Steuern im Redundanzfall wird von der zweiten Steuereinheit 120 das zweite Bremsventil 25 mit einem Anforderungs-Signal S2 angesteuert, das proportional zur Fahrzeug-Soll-Verzögerung zSoll ist. In Abhängigkeit davon werden vom zweiten Bremsventil 25 der zweite Bremsventil-Relaisventil-Steuerdruck pA2 über die zweite Druckleitung 22b an das erste Wechselventil 21A und der zweite Bremsventil-Achsdmodulator-Steuerdruck pB2 über die vierte Druckleitung 22d an das zweite Wechselventil 21B ausgegeben.

Das zweite Bremsventil 25 kann hierbei beispielsweise als ein beliebiges Proportionalitätsventil ausgeführt sein, das proportional zum Anforderungs-Signal S2 den zweiten Bremsventil-Relaisventil-Steuerdruck pA2 bzw. den zweiten Bremsventil-Achsmodulator-Steuerdruck pB2 erzeugt und an die Wechselventile 21A, 21B der einzelnen Bremskreise A, B aussteuert. Hierbei kann wie in Fig. 1a, b dargestellt für zwei Bremskreise A, B ein 2-Kanal-Proportionaitätsventil 25 vorgesehen sein, das pneumatisch unabhängig voneinander den zweiten Bremsventil-Relaisventil-Steuerdruck pA2 sowie den zweiten Bremsventil-Achsmodulator-Steuerdruck pB2 erzeugen kann, oder wie in Fig. 2 dargestellt für jeden Bremskreis A, B ein separates Proportionalitätsventil 25A, 25B, wobei ein erstes Proportionalitätsventil 25A den zweiten Bremsventil-Relaisventil-Steuerdruck pA2 und ein zweites Proportionalitätsventil 25B den zweiten Bremsventil-Achsmodulator-Steuerdruck pB2 erzeugt. Das erste Proportionalitätsventil 25A kann hierbei auch im Relaisventil 13 und das zweite Proportionalitätsventil 25B im Achsmodulator integriert sein, um kürzere Wege zwischen den Komponenten zu erhalten.

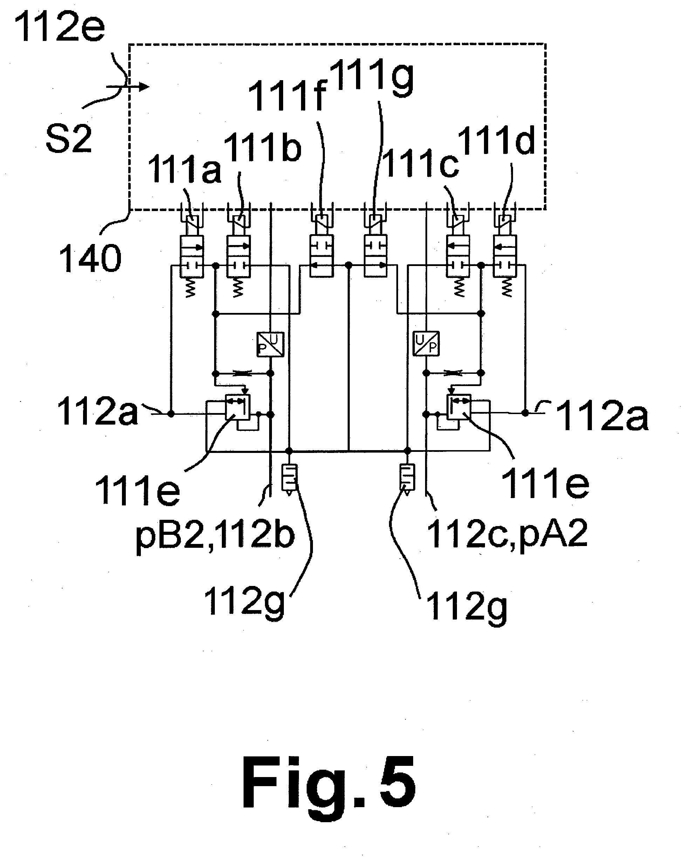

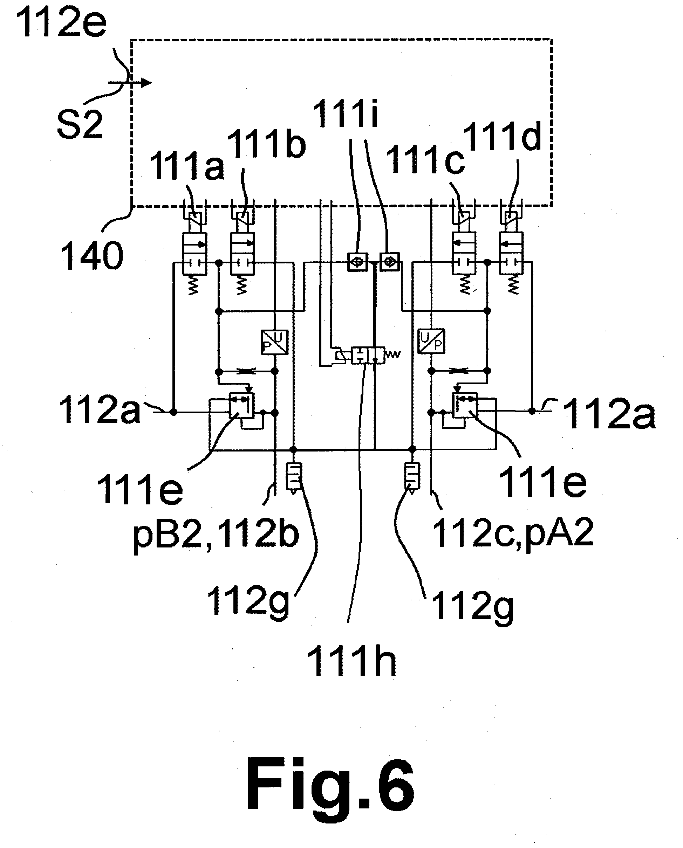

Als 2-Kanal-Proportionalitätsventil kann hierbei beispielsweise auch ein wie ein Achsmodulator funktionierendes Bauteil verwendet werden. Ein derartiges zweites Bremsventil 25 ist in den Figuren 5 und 6 dargestellt. Demnach weist das als Achsmodulator ausgeführte zweite Bremsventil 25 ein erstes Bremsventil-Einlassventil 111a, ein erstes Bremsventil-Auslassventil 111b, ein zweites Bremsventil-Auslassventil 111c und ein zweites Bremsventil-Einlassventil 111d auf, die jeweils als elektronisch gesteuerte Magnetventile ausgeführt sind. Über das erste Bremsventil-Einlassventil 111a und das erste Bremsventil-Auslassventil 111b wird der in dem ersten Bremskreis A ausgesteuerte zweite Bremsventil-Relaisventil-Steuerdruck pA2 und über das zweite Bremsventil-Einlassventil 111d und das zweite Bremsventil-Auslassventil 111c der in dem zweiten Bremskreis B ausgesteuerte zweite Bremsventil-Achsmodulator-Steuerdruck pB2 gesteuert. Beide zweiten Bremsventil-Steuerdrücke pA2, pB2 werden hierbei gemäß dieser Ausführung pneumatisch unabhängig voneinander geregelt.

Sind die Bremsventil-Einlassventile 111a, 111d geöffnet und die Bremsventil-Auslassventile 111b, 111c geschlossen, so wird der entsprechende zweite Bremsventil-Steuerdruck pA2, pB2 erhöht, indem der an einem Bremsventil-Druckluftanschluss 112a bereitgestellte pneumatische Arbeitsdruck aus einem zweiten Druckvorratsbehälter 20B in entsprechender Höhe über ein Bremsventil-Relaisventil 111e proportional an Bremsventil-Arbeitsanschlüsse 112c bzw. 112b ausgesteuert wird, wobei ein erster Bremsventil-Arbeitsanschluss 112c über die zweite Druckluftleitung 22b mit dem ersten Wechselventil 21A verbunden ist und ein zweiter Bremsventil-Arbeitsanschluss 112b über die vierte Druckluftleitung 22d mit dem zweiten Wechselventil 21B. Sind die Bremsventil-Einlassventile 111a, 111d geschlossen und die Bremsventil-Auslassventile 111b, 111c geöffnet, so kann der entsprechende zweite Bremsventil-Steuerdruck pA2, pB2 durch Entlüftung über einen Bremsventil-Entlüftungsanschluss 112g verringert werden. Sind die Bremsventil-Einlassventile 111a, 111d und die Bremsventil-Auslassventile 111b, 111c gesperrt, so wird der zweite Bremsventil-Steuerdruck pA2, pB2 gehalten.

Die Vorgabe zum Druckerhöhen, Druckhalten oder Drucksenken und somit die Stellung der Bremsventil-Einlass- und Bremsventil-Auslassventile 111a, 111b, 111c, 111d kann von der Bremsventil-Elektronik 140 des zweiten Bremsventils 25 gesteuert werden, wobei die zweite Steuereinheit 110 über einen Bremsventil-Steuereingang 112e elektronisch das Anforderungs-Signal S2 vorgibt, das den auszusteuernden zweiten Bremsventil-Steuerdruck pA2, pB2 bestimmt, so dass beispielsweise eine Fahrzeug-Soll-Verzögerung zSoll redundant umgesetzt werden kann.

Weiterhin sind im als Achsmodulator ausgeführten zweiten Bremsventil 25 Bremsventil-Redundanzventile 111f, 111g vorgesehen, die ebenfalls elektronisch gesteuert werden können und ebenfalls als Magnetventile ausgeführt sind. Sobald ein Ausfall oder ein Defekt in der Bremsventil-Elektronik 140 vorliegt, werden die Bremsventil-Redundanzventile 111f, 111g automatisch geöffnet und gleichzeitig die Bremsventil-Einlassventile 111a, 111d und die Bremsventil-Auslassventile 111b, 111c geschlossen, beispielsweise durch eine entsprechende Federvorspannung der Magnetventile 111a, 111b, 111c, 111d, 111f, 111g, so dass diese bei einem Ausfall automatisch mechanisch in die entsprechende Stellung gebracht werden, die auch in Fig. 5 dargestellt ist. In dem Fall werden die Bremsventil-Relaisventile 111e mit dem Bremsventil-Entlüftungsanschluss 112g verbunden, so dass bei einem elektronischen Ausfall eine kontrollierte Entlüftung stattfinden kann.

Alternativ kann gemäß Fig. 6 statt den beiden Bremsventil-Redundanzventilen 111f, 111g für beide Bremskreise A, Bein einzelnes Bremsventil-Redundanzventil 111h vorgesehen sein, das beide Bremsventil-Relaisventile 111e gleichzeitig mit dem Bremsventil-Entlüftungsanschluss 112g verbindet. Um im Normalbetrieb die Ansteuerung beider Bremsventil-Relaisventile 111e pneumatisch zu trennen, ist jeweils ein zusätzliches Rückschlagventil 111i im jeweiligen Bremskreis A, B vorgesehen, so dass beide Bremsventil-Relaisventile 111e pneumatisch nicht miteinander verbunden sind.

Liegt im Redundanzfall keine über das erste Bremsventil 24 vorgegebene Fahrerbremsung vor, d.h. der erste Bremsventil-Relaisventil-Steuerdruck pA1 sowie der erste Bremsventil-Achsmodulator-Steuerdruck pB1 sind annähernd null, wird vom ersten Wechselventil 21A der größere zweite Bremsventil-Relaisventil-Steuerdruck pA2 durchgelassen. Entsprechend lässt das zweite Wechselventil 21B den zweiten Bremsventil-Achsmodulator-Steuerdruck pB2 durch. Somit wird das Relaisventil 13 über den am ersten Relaisventil-Steuereingang 14 vorherrschenden, dem zweiten Bremsventil-Relaisventil-Steuerdruck pA2 entsprechenden Relaisventil-Steuerdruck pA angesteuert und der Achsmodulator 11 über den am zweiten Achsmodulator-Steuereingang 12f vorherrschenden, dem zweiten Bremsventil-Achsmodulator-Steuerdruck pB2 entsprechenden Achsmodulator-Steuerdruck pB. Proportional dazu steuert das Relaisventil 13 bzw. der Achsmodulator 11 dann den entsprechenden Bremsdruck p1, p2 bzw. p3, p4 an die Betriebsbremsen 1, 2 bzw. 3, 4 aus.

Somit können bei einem Ausfall oder einem Defekt in der Elektronik des Relaisventils 13 und des Achsmodulators 11 oder der Signalverbindung vom ersten zur zweiten Steuereinheit 110, 120 noch von der zweiten Steuereinheit 120 elektronisch vorgegebene Fahrzeug-Soll-Verzögerungen zSoll durchgesetzt werden, indem das Relaisventil 13 und der Achsmodulator 11 vom zweiten Bremsventil 25 pneumatisch angesteuert werden.

Damit der Fahrer auch bei einem Ausfall der Elektronik noch manuell eingreifen kann, beispielsweise in einer Notbremssituation, wird bei einer Betätigung des Bremspedals durch den Fahrer im Redundanzfall durch das erste Bremsventil 24 der erste Bremsventil-Relaisventil-Steuerdruck pA1 und der erste Bremsventil-Achsmodulator-Steuerdruck pB1 für den jeweiligen Bremskreis A, B über die Druckluftleitungen 22a, 22c ausgesteuert. Ist die Bremsanforderung stärker als die vom zweiten Bremsventil 25 elektrisch über das Anforderungs-Signal S2 vorgegebene Bremsanforderung, steuert das erste Wechselventil 21A bzw. das zweite Wechselventil 21B den ersten Bremsventil-Relaisventil-Steuerdruck pA1 bzw. den ersten Bremsventil-Achsmodulator-Steuerdruck pB1 als Relaisventil-Steuerdruck pA bzw. als Achsmodulator-Steuerdruck pB an das Relaisventil 13 bzw. den Achsmodulator 11 aus, so dass entsprechend dem Fahrerwunsch auch im Redundanzfall ein entsprechender Bremsdruck p1, p2 bzw. p3, p4 an den Betriebsbremsen 1, 2 bzw. 3,4 eingestellt werden kann. Dadurch kann eine weitere Redundanz erreicht werden.

Somit kann bei einem Ausfall der Elektronik eine pneumatisch gesteuerte Rückfallebene gebildet werden, indem das zweite Bremsventil 25 elektronisch angesteuert wird. Gibt der Fahrer zusätzlich einen Bremswunsch vor, indem er das Bremspedal beispielsweise in einer Notbremssituation betätigt, wird die elektronische Bremsanforderung übersteuert.

Diese Rückfallebene funktioniert auch lediglich für einen Bremskreis A, B, d.h. falls lediglich die elektronische Ansteuerung für das Relaisventil 13 oder den Achsmodulator 11 ausfällt. Dann kann in einem Bremskreis A, B eine elektronische Ansteuerung und in dem jeweils anderen Bremskreis B, A eine pneumatische Ansteuerung über das zweite Bremsventil 25 stattfinden.

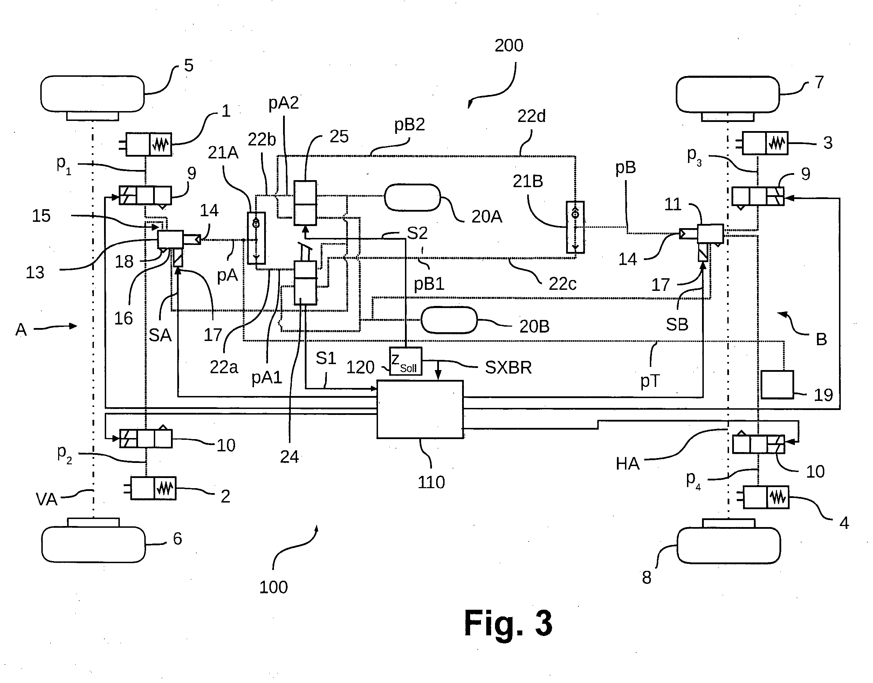

Alternativ kann wie in Fig. 3 dargestellt als Bremssystem 100 auch ein ABS-Bremssystem 100 vorliegen, das an beiden Fahrzeugachsen VA, HA jeweils ABS-Bremsventile 9, 10 aufweist. Über die Steuerventile 11, 13 wird jeweils ein Bremsdruck p1, p2, p3, p4 an den Betriebsbremsen 1, 2, 3, 4 bereitgestellt, wobei dieser durch die ABS-Bremsventile 9, 10 in einem ABS-Bremsschlupffall gehalten oder verringert werden kann. Die Steuerventile 11, 13 sind hierbei identisch ausgeführt und sind jeweils als Relaisventil ausgeführt, das sowohl elektronisch über den elektronischen Relaisventil-Steuereingang 17 als auch pneumatisch über den pneumatischen Relaisventil-Steuereingang 14 gesteuert werden kann. Der pneumatische Relaisventil-Steuereingang 14 ist hierbei als ein 3/2 Wegeventil ausgeführt, das je nach vorliegendem Steuersignal SA, SB einen entsprechenden Druck in das Relaisventil einlässt. Können die Steuerventile 11, 13 über die Steuersignale SA, SB nicht mehr angesteuert werden, so wird entsprechend dem EBS-Bremssystem 100 in den Figuren 1a, 1b und 2, über das zweite Bremsventil 25 ein pneumatischer Steuerdruck pA, pB beispielsweise über das jeweilige Wechselventil 21A, 21B an den pneumatischen Relaisventil-Steuereingang 14 eingestellt.

### Bezugszeichenliste

- 1, 2, 3, 4: Betriebsbremsen
- 5, 6, 7, 8: Räder des Nutzfahrzeuges 200
- 9, 10: ABS-Bremsventile
- 11: Achsmodulator
- 11a: erstes Einlassventil
- 11b: erstes Auslassventil
- 11c: zweites Auslassventil
- 11d: zweites Einlassventil
- 11e: Achmodulator-Relaisventil
- 11f, 11g: Redundanzventile
- 12a: Achsmodulator-Druckluftanschluss
- 12b, 12c: Achsmodulator-Arbeitsanschlüsse
- 12e: erster Achsmodulator-Steuereingang (elektrisch)
- 12f: zweiter Achsmodulator-Steuereingang (pneumatisch)
- 12g: Achsmodulator-Entlüftungsanschluss
- 13: Relaisventil
- 14: erster Relaisventil-Steuereingang (pneumatisch)
- 15: Relaisventil-Arbeitsanschluss
- 16: Relaisventil-Druckluftanschluss
- 17: zweiter Relaisventil-Steuereingang (elektrisch)
- 18: Relaisventil-Entlüftungsanschluss
- 19: Anhänger-Steuerventil
- 20A: erster Druckvorratsbehälter
- 20B: zweiter Druckvorratsbehälter
- 21A: erstes Wechselventil
- 21B: zweites Wechselventil
- 22a: erste Druckluftleitung
- 22b: zweite Druckluftleitung
- 22c: dritte Druckluftleitung
- 22d: vierte Druckluftleitung
- 24: erstes Bremsventil
- 25: zweites Bremsventil
- 100: pneumatisches Bremssystem
- 110: erste Steuereinheit
- 111a: erstes Bremsventil-Einlassventil
- 111b: erstes Bremsventil-Auslassventil
- 111c: zweites Bremsventil-Auslassventil
- 111d: zweites Bremsventil-Einlassventil
- 111e: Bremsventil-Relaisventil
- 111f, 111g: Bremsventil-Redundanzventil
- 112a: Bremsventil-Druckluftanschluss
- 112b,1 12c: Bremsventil-Arbeitsanschlüsse
- 112e: Bremsventil-Steuereingang
- 120: zweite Steuereinheit
- 121A: erstes T-Stück
- 121B: zweites T-Stück
- 130: Achsmodulator-Elektronik
- 140: Bremsventil-Elektronik
- 200: Nutzfahrzeug

- A: erster Bremskreis
- B: zweiter Bremskreis
- HA: Hinterachse
- MSA, MSB: Mittelwert der Bremsventil-Steuerdrücke
- p1, p2, p3, p4: Bremsdruck an den Betriebsbremsen 1, 2, 3, 4
- pA: Relaisventil-Steuerdruck
- pA1: erster Bremsventil-Relaisventil-Steuerdruck
- pA2: zweiter Bremsventil-Relaisventil-Steuerdruck
- pB: Achsmodulator-Steuerdruck
- pB1: erster Bremsventil-Achsmodulator-Steuerdruck
- pB2: zweiter Bremsventil-Achsmodulator-Steuerdruck
- pSA, pSB: Summe der Bremsventil-Steuerdrücke
- pT: Anhänger-Steuerdruck
- S1: Betätigungs-Signal
- S2: Anforderungs-Signal
- SA: Relaisventil-Steuersignal
- SB: Achsmodulator-Steuersignal
- SXBR: XBR-Signal
- VA: Vorderachse
- zSoll: Fahrzeug-Soll-Verzögerung

## Patentansprüche

1. Elektronisch steuerbares pneumatisches Bremssystem (100), mindestens aufweisend:
mindestens einen Bremskreis (A, B) wobei in dem mindestens einen Bremskreis (A, B) unabhängig voneinander Bremsdrücke (p1, p2, p3, p4) an Betriebsbremsen (1, 2, 3, 4) einstellbar sind, wobei dem mindestens einen Bremskreis (A, B) dazu mindestens ein Steuerventil (13, 11) zugeordnet ist,
wobei das mindestens eine Steuerventil (13, 11) einen elektronischen Steuereingang (17, 12e) zum Aufnehmen eines elektrischen Steuersignals (SA, SB) und einen pneumatischen Steuereingang (14, 12f) zum Aufnehmen eines Steuerdrucks (pA, pB) aufweist, und
wobei das mindestens eine Steuerventil (13, 11) in Abhängigkeit des Steuersignals (SA, SB) oder des Steuerdrucks (pA, pB) über Arbeitsanschlüsse (15, 12b, 12c) die Betriebsbremsen (1, 2, 3, 4) des mindestens einen Bremskreises (A, B) mit einem Bremsdruck (p1, p2, p3, p4) versorgt,
eine erste Steuereinheit (110) zum Ausgeben der Steuersignale (SA, SB) in Abhängigkeit einer Fahrzeug-Soll-Verzögerung (zSoll) zum elektrischen Ansteuern des mindestens einen Steuerventils (13, 11), wobei die Fahrzeug-Soll-Verzögerung (zSoll) von einem ersten Bremsventil (24) vorgegeben werden kann, und
das erste Bremsventil (24) einen ersten Bremsventil-Steuerdruck (pA1, pB1) an den mindestens einen Bremskreis (A, B) vorgibt,
**dadurch gekennzeichnet, dass**
ein zweites Bremsventil (25) zum Ausgeben eines zweiten Bremsventil-Steuerdruckes (pA2, pB2) derartig im pneumatischen Bremssystem (100) angeordnet ist, dass der erste Bremsventil-Steuerdruck (pA1, pB1) des ersten Bremsventils (24) und/oder der zweite Bremsventil-Steuerdruck (pA2, pB2) des zweiten Bremsventils (25) als Steuerdruck (pA, pB) an das mindestens eine Steuerventil (13, 11) ausgegeben wird zum pneumatischen Ansteuern des mindestens einen Steuerventils (13, 11),
wobei das zweite Bremsventil (25) elektronisch ansteuerbar ist, wenn eine elektrische Ansteuerung des mindestens einen Steuerventils (11, 13) verhindert ist zum Ausbilden einer elektronisch-pneumatisch gesteuerten Redundanz.

2. Elektronisch steuerbares pneumatisches Bremssystem (100) nach Anspruch 1, **dadurch gekennzeichnet, dass** das mindestens eine Steuerventil (13, 11) in Abhängigkeit des Steuersignals (SA, SB) oder des Steuerdrucks (pA, pB) die Betriebsbremsen (1, 2, 3, 4) des mindestens einen Bremskreises (A, B) mit einem zum Steuersignal (SA, SB) oder zum Steuerdruck (pA, pB) proportionalen Bremsdruck (p1, p2, p3, p4) versorgt.

3. Elektronisch steuerbares pneumatisches Bremssystem (100) nach Anspruch 1 oder 2, **dadurch gekennzeichnet, dass** das mindestens eine Steuerventil (13, 11) ein Wegeventil, insbesondere ein 3/2-Wegeventil aufweist, das von der ersten Steuereinheit (110), insbesondere gepulst, ansteuerbar ist zum Versorgen der Betriebsbremsen (1, 2, 3, 4) mit dem Bremsdruck (p1, p2, p3, p4).

4. Elektronisch steuerbares pneumatisches Bremssystem (100) nach einem der vorhergehenden Ansprüche, **dadurch gekennzeichnet, dass** das erste Bremsventil (24) und das zweite Bremsventil (25) über Druckluftleitungen (22a, 22b, 22c, 22d) mit mindestens einem Wechselventil (21A, 21B) verbunden sind zum Aussteuern des ersten Bremsventil-Steuerdrucks (pA1, pB1) durch das erste Bremsventil (24) und des zweiten Bremsventil-Steuerdrucks (pA2, pB2) durch das zweite Bremsventil (25) an das mindestens eine Wechselventil (21A, 21B),
wobei das mindestens eine Wechselventil (21A, 21B) mit dem pneumatischen Steuereingang (14, 12f) des mindestens einen Steuerventils (11, 13) verbunden ist und das mindestens eine Wechselventil (21A, 21B) lediglich einen ausgewählten, insbesondere den höheren, der von den beiden Bremsventilen (24, 25) ausgesteuerten Bremsventil-Steuerdrücke (pA1, pA2, pB1, pB2) als Steuerdruck (pA, pB) zu dem pneumatischen Steuereingang (14, 12f) des mindestens einen Steuerventils (11, 13) weiterleitet zum Ausbilden einer Redundanz.

5. Elektronisch steuerbares pneumatisches Bremssystem (100) nach Anspruch 4, **dadurch gekennzeichnet, dass** das mindestens eine Wechselventil (21A, 21B) in dem mindestens einen Steuerventil (11, 13) des mindestens einen Bremskreises (A, B) oder dem ersten Bremsventil (24) oder dem zweiten Bremsventil (25, 25A, 25B) integriert ist.

6. Elektronisch steuerbares pneumatisches Bremssystem (100) nach einem der Ansprüche 1 bis 3, **dadurch gekennzeichnet, dass** das erste Bremsventil (24) und das zweite Bremsventil (25) über Druckluftleitungen (22a, 22b, 22c, 22d) mit mindestens einem T-Stück (121A, 121B) verbunden sind zum Aussteuern des ersten Bremsventil-Steuerdrucks (pA1, pB1) durch das erste Bremsventil (24) und des zweiten Bremsventil-Steuerdrucks (pA2, pB2) durch das zweite Bremsventil (25) an das mindestens eine T-Stück (121A, 121B),
wobei das mindestens eine T-Stück (121A, 121B) mit dem pneumatischen Steuereingang (14, 12f) des mindestens einen Steuerventils (11, 13) verbunden ist und das mindestens eine T-Stück (121A, 121B) eine Summe (pSA, pSB) oder einen Mittelwert (MSA, MSB) der von den beiden Bremsventilen (24, 25) im jeweiligen Bremskreis (A, B) ausgesteuerten Bremsventil-Steuerdrücken (pA1, pA2, pB1, pB2) als Steuerdruck (pA, pB) zu dem pneumatischen Steuereingang (14, 12f) des mindestens einen Steuerventils (11, 13) weiterleitet zum Ausbilden einer Redundanz.

7. Elektronisch steuerbares pneumatisches Bremssystem (100) nach einem der vorhergehenden Ansprüche, **dadurch gekennzeichnet, dass** das mindestens eine Steuerventil als ein Relaisventil (13) ausgeführt ist, wobei
das Relaisventil (13) einen ersten Relaisventil-Steuereingang (14) zum Aufnehmen eines Relaisventil-Steuerdrucks (pA), einen zweiten Relaisventil-Steuereingang (17) zum Aufnehmen eines Relaisventil-Steuersignals (SA) sowie Relaisventil-Arbeitsanschlüsse (15) zum Ausgeben eines Bremsdruckes (p1, p2) an die Betriebsbremsen (1, 2) aufweist, wobei der Bremsdruck (p1, p2) proportional zum Relaisventil-Steuerdruck (pA) oder zum Relaisventil-Steuersignal (SA) ist.

8. Elektronisch steuerbares pneumatisches Bremssystem (100) nach Anspruch 7, **dadurch gekennzeichnet, dass** das Relaisventil (13) lediglich dann über den Relaisventil-Steuerdruck (pA) pneumatisch ansteuerbar ist, wenn eine elektrische Ansteuerung über das Relaisventil-Steuersignal (SA) verhindert ist.

9. Elektronisch steuerbares pneumatisches Bremssystem (100) nach einem der vorhergehenden Ansprüche, **dadurch gekennzeichnet, dass** das mindestens eine Steuerventil als ein Achsmodulator (11) ausgeführt ist, wobei
der Achsmodulator (11) einen ersten Achsmodulator-Steuereingang (12e) zum Aufnehmen eines Achsmodulator-Steuersignals (SB), einen zweiten Achsmodulator-Steuereingang (12f) zum Aufnehmen eines Achsmodulator-Steuerdruckes (pB) sowie Achsmodulator-Arbeitsanschlüsse (12b, 12c) zum Ausgeben eines Bremsdruckes (p3, p4) an die Betriebsbremsen (3, 4) aufweist, wobei der Bremsdruck (p3, p4) proportional zum Achsmodulator-Steuerdruck (pB) oder zum Achsmodulator-Steuersignal (SB) ist.

10. Elektronisch steuerbares pneumatisches Bremssystem (100) nach Anspruch 9, **dadurch gekennzeichnet, dass** der Achsmodulator (11) lediglich dann über den Achsmodulator-Steuerdruck (pB) pneumatisch ansteuerbar ist, wenn eine elektrische Ansteuerung über das Achsmodulator-Steuersignal (SA) verhindert ist.

11. Elektronisch steuerbares pneumatisches Bremssystem (100) nach einem der vorhergehenden Ansprüche, **dadurch gekennzeichnet, dass** das Bremssystem (100) als ein zweikreisiges Bremssystem (100) ausgeführt ist,
wobei dazu ein einem ersten Bremskreis (A) zugeordnetes erstes Steuerventil (13) und einem zweiten Bremskreis (B) zugeordnetes zweites Steuerventil (11) vorgesehen ist,
wobei beide Steuerventile (13) sowohl elektrisch über Steuersignale (SA, SB) als auch pneumatisch über Steuerdrücke (pA, pB) steuerbar sind.

12. Elektronisch steuerbares pneumatisches Bremssystem (100) nach einem der vorhergehenden Ansprüche, **dadurch gekennzeichnet, dass** das erste Bremsventil (24) als ein Bremswertgeber ausgeführt ist und der Bremswertgeber einen zu einer Bremspedalbetätigung durch einen Fahrer proportionalen ersten Bremsventil-Steuerdruck (pA1, pB1) für den mindestens einen Bremskreis (A, B) ausgeben kann und/oder ein dazu proportionales elektrisches Betätigungs-Signal (S1) an die erste Steuereinheit (110) übermitteln kann.

13. Elektronisch steuerbares pneumatisches Bremssystem (100) nach einem der vorhergehenden Ansprüche, **dadurch gekennzeichnet, dass** das zweite Bremsventil (25, 25A, 25B) ein Proportionalitätsventil ist, das in Abhängigkeit eines elektrischen Anforderungs-Signals (S2) einen dazu proportionalen zweiten Bremsventil-Steuerdruck (pA2, pB2) ausgibt.

14. Elektronisches steuerbares pneumatisches Bremssystem (100) nach Anspruch 13, **dadurch gekennzeichnet, dass** in dem zweiten Bremsventil für jeden Bremskreis (A, B) ein 1-Kanal-Proportionalitätsventil (25A, 25B) vorgesehen ist, wobei jedes 1-Kanal-Proportionaitätsventil (25A, 25B) einen zweiten Bremsventil-Steuerdruck (pA2, pB2) an den jeweiligen Bremskreis (A, B) ausgibt oder das zweite Bremsventil als ein Mehrkanal-Proportionalitätsventil (25) ausgeführt ist, das für jeden Bremskreis (A, B) pneumatisch unabhängig voneinander die zweiten Bremsventil-Steuerdrücke (pA2, pB2) ausgibt.

15. Elektronisch steuerbares pneumatisches Bremssystem (100) nach Anspruch 13 oder 14, **dadurch gekennzeichnet, dass** das zweite Bremsventil (25, 25A, 25B) als ein Achsmodulator ausgeführt ist, insbesondere ein 1-Kanal-Achsdmodulator oder ein 2-Kanal-Achsmodulator.

16. Elektronisch steuerbares pneumatisches Bremssystem (100) nach einem der Ansprüche 13 bis 15, **dadurch gekennzeichnet, dass** das zweite Bremsventil, insbesondere ausgebildet als Proportionalitätsventil (25, 25A, 25B) in dem mindestens einen Steuerventil (11, 13) des mindestens einen Bremskreises (A, B) oder in dem ersten Bremsventil (24) integriert ist.

17. Elektronisch steuerbares pneumatisches Bremssystem (100) nach einem der vorhergehenden Ansprüche, **dadurch gekennzeichnet, dass** das zweite Bremsventil (25, 25A, 25B) als ein Wegeventil, insbesondere ein 3/2-Wegeventil ausgeführt ist, das in Abhängigkeit eines elektrischen Anforderungs-Signals (S2), insbesondere gepulst, ansteuerbar ist zum Ausgeben des zweiten Bremsventil-Steuerdrucks (pA2, pB2).

18. Elektronisch steuerbares pneumatisches Bremssystem (100) nach einem der vorhergehenden Ansprüche, **dadurch gekennzeichnet, dass** im elektronisch steuerbaren pneumatischen Bremssystem (100) eine zweite Steuereinheit (120) vorgesehen ist, die ausgebildet ist, die Fahrzeug-Soll-Verzögerung (zSoll) vorzugeben, und das zweite Bremsventil (25, 25A, 25B) elektronisch mit einem Anforderungs-Signal (S2) anzusteuern, wenn eine elektrische Ansteuerung des mindestens einen Steuerventils (11, 13) verhindert ist zum Ausbilden einer elektronisch-pneumatisch gesteuerten Redundanz.

19. Elektronisch steuerbares pneumatisches Bremssystem (100) nach Anspruch 18, **dadurch gekennzeichnet, dass** das erste Bremsventil (24) elektronisch oder elektro-mechanisch, beispielsweise von der ersten Steuereinheit (110) und/oder der zweiten Steuereinheit (120) betätigt werden kann zum Ausbilden einer zusätzlichen mechanischpneumatischen Redundanz.

20. Elektronisch steuerbares pneumatisches Bremssystem (100) nach Anspruch 18 oder 19, **dadurch gekennzeichnet, dass** die zweite Steuereinheit (120) als eine Steuerung für ein autonom gesteuertes Nutzfahrzeug (200) ausgeführt ist und die zweite Steuereinheit (120) mit der ersten Steuereinheit (110) verbunden ist zum Übermitteln eines XBR-Signals (SXBR) zum Vorgeben der Fahrzeug-Soll-Verzögerung (zSoll).

21. Elektronisch steuerbares pneumatisches Bremssystem (100) nach einem der Ansprüche 18 bis 20, **dadurch gekennzeichnet, dass** die zweite Steuereinheit (120) in der ersten Steuereinheit (110) integriert ist.

22. Elektronisch steuerbares pneumatisches Bremssystem (100) nach einem der vorhergehenden Ansprüche, **dadurch gekennzeichnet, dass** zusätzlich ein Anhänger-Steuerventil (19) vorgesehen ist, das mit einem vom ersten Bremsventil (24) und/oder dem zweiten Bremsventil (25, 25A, 25B) vorgegebenen Anhänger-Steuerdruck (pT) angesteuert werden kann zum Ausbilden einer Redundanz für einen Anhängerfahrzeug.

23. Elektronisch steuerbares pneumatisches Bremssystem (100) nach einem der vorhergehenden Ansprüche, **dadurch gekennzeichnet, dass** das Bremssystem (100) ein ABS-Bremssystem oder ein EBS-Bremssystem ist.

24. Verfahren zum elektronischen Steuern eines pneumatischen Bremssystems nach einem der Ansprüche 1 bis 22, mit mindestens den folgenden Schritten:
- Erkennen, ob ein Ausfall oder ein Defekt in der elektronischen Ansteuerung der Steuerventile (13, 11) des mindestens einen Bremskreises (A, B), insbesondere ein Defekt der ersten Steuereinheit (110) vorliegt;
- Ansteuern des zweiten Bremsventils (25) mit dem Anforderungs-Signal (S2) derartig, dass das zweite Bremsventil (25) einen zweiten Bremsventil-Steuerdruck (pA2, pB2) ausgibt, so dass im pneumatischen Bremssystem (100) entweder der erste Bremsventil-Steuerdruck (pA1, pB1) des ersten Bremsventils (24) oder der zweite Bremsventil-Steüerdruck (pA2, pB2) des zweiten Bremsventils (25) als Steuerdruck (pA, pB) an das mindestens eine Steuerventil (13, 11) ausgegeben wird.

25. Fahrzeug (200), insbesondere Nutzfahrzeug (200), mit einem elektronisch gesteuerten pneumatischen Bremssystem (100) nach einem der Ansprüche 1 bis 23, insbesondere geeignet zur Durchführung eines Verfahrens nach Anspruch 24.

## Claims

1. Electronically controllable pneumatic brake system (100), at least comprising:
at least one brake circuit (A, B), wherein in the at least one brake circuit (A, B) braking pressures (p1, p2, p3, p4) at service brakes (1, 2, 3, 4) can be adjusted independently of each other, wherein at least one control valve (13, 11) is associated with the at least one brake circuit (A, B) for this purpose,
wherein the at least one control valve (13, 11) comprises an electronic control input (17, 12e) for receiving an electrical control signal (SA, SB) and a pneumatic control input (14, 12f) for receiving a control pressure (pA, pB), and
wherein the at least one control valve (13, 11) supplies the service brakes (1, 2, 3, 4) of the at least one brake circuit (A, B) with a braking pressure (p1, p2, p3, p4) via working connections (15, 12b, 12c) depending on the control signals (SA, SB) or the control pressure (pA, pB),
a first control unit (110) for outputting the control signals (SA, SB) depending on a target vehicle deceleration (zSoll) for the electrical actuation of the at least one control valve (13, 11), wherein the target vehicle deceleration (zSoll) can be specified by a first brake valve (24), and
the first brake valve (24) specifies a first brake valve control pressure (pA1, pB1) at the at least one brake circuit (A, B),
**characterized in that**
a second brake valve (25) for outputting a second brake valve control pressure (pA2, pB2) is disposed in the pneumatic brake system (100) such that the first brake valve control pressure (pA1, pB1) of the first brake valve (24) and/or the second brake valve control pressure (pA2, pB2) of the second brake valve (25) is output as a control pressure (pA, pB) to the at least one control valve (13, 11) for the pneumatic actuation of the at least one control valve (13, 11),
wherein the second brake valve (25) can be electronically controlled if electrical actuation of the at least one control valve (11, 13) is prevented to create an electronically-pneumatically controlled redundancy.

2. Electronically controllable pneumatic brake system (100) according to Claim 1, **characterized in that**, depending on the control signal (SA, SB) or the control pressure (pA, pB), the at least one control valve (13, 11) supplies the service brakes (1, 2, 3, 4) of the at least one brake circuit (A, B) with a braking pressure (p1, p2, p3, p4) proportional to the control signal (SA, SB) or to the control pressure (pA, pB).

3. The electronically controllable pneumatic brake system (100) according to Claim 1 or 2, **characterized in that** the at least one control valve (13, 11) comprises a directional valve, in particular a 3/2-way valve, which can be actuated by the first control unit (110), in particular in a pulsed manner, to supply the service brakes (1, 2, 3, 4) with the braking pressure (p1, p2, p3, p4).

4. Electronically controllable pneumatic brake system (100) according to any one of the preceding claims, **characterized in that** the first brake valve (24) and the second brake valve (25) are connected via compressed air lines (22a, 22b, 22c, 22d) to at least one shuttle valve (21A, 21B) to adjust the first brake valve control pressure (pA1, pB1) through the first brake valve (24) and the second brake valve control pressure (pA2, pB2) through the second brake valve (25) to the at least one shuttle valve (21A, 21B),
wherein the at least one shuttle valve (21A, 21B) is connected to the pneumatic control input (14, 12f) of the at least one control valve (11, 13) and the at least one shuttle valve (21A, 21B) only passes a selected brake valve control pressure, in particular the higher, of the brake valve control pressures (pA1, pA2, pB1, pB2) adjusted by the two brake valves (24, 25) as a control pressure (pA, pB) to the pneumatic control input (14, 12f) of the at least one control valve (11, 13) to provide redundancy.

5. Electronically controllable pneumatic brake system (100) according to Claim 4, **characterized in that** the at least one shuttle valve (21A, 21B) is integrated within the at least one control valve (11, 13) of the at least one brake circuit (A, B) or the first brake valve (24) or the second brake valve (25, 25A, 25B).

6. Electronically controllable pneumatic brake system (100) according to any one of Claims 1 through 3, **characterized in that** the first brake valve (24) and the second brake valve (25) are connected via compressed air lines (22a, 22b, 22c, 22d) to at least one T-piece (121A, 121B) to adjust the first brake valve control pressure (pA1, pB1) through the first brake valve (24) and the second brake valve control pressure (pA2, pB2) through the second brake valve (25) at the at least one T-piece (121A, 121B),
wherein the at least one T-piece (121A, 121B) is connected to the pneumatic control input (14, 12f) of the at least one control valve (11, 13) and the at least one T-piece (121A, 121B) passes a sum (pSA, pSB) or an average value (MSA, MSB) of the brake valve control pressures (pA1, pA2, pB1, pB2) adjusted by the two brake valves (24, 25) in the respective brake circuit (A, B) as a control pressure (pA, pB) to the pneumatic control input (14, 12f) of the at least one control valve (11, 13) to provide redundancy.

7. Electronically controllable pneumatic brake system (100) according to any one of the preceding claims, **characterized in that** the at least one control valve is implemented as a relay valve (13), wherein
the relay valve (13) comprises a first relay valve control input (14) for receiving a relay valve control pressure (pA), a second relay valve control input (17) for receiving a relay valve control signal (SA) and relay valve working connections (15) for outputting a braking pressure (p1, p2) to the service brakes (1, 2), wherein the braking pressure (p1, p2) is proportional to the relay valve control pressure (pA) or to the relay valve control signal (SA).

8. Electronically controllable pneumatic brake system (100) according to Claim 7, **characterized in that** the relay valve (13) can only be pneumatically actuated by means of the relay valve control pressure (pA) if electrical actuation by means of the relay valve control signal (SA) is prevented.

9. Electronically controllable pneumatic brake system (100) according to any one of the preceding claims, **characterized in that** the at least one control valve is implemented as an axle modulator (11), wherein
the axle modulator (11) comprises a first axle modulator control input (12e) for receiving an axle modulator control signal (SB), a second axle modulator control input (12f) for receiving an axle modulator control pressure (pB) and axle modulator working connections (12b, 12c) for outputting a braking pressure (p3, p4) to the service brakes (3, 4), wherein the braking pressure (p3, p4) is proportional to the axle modulator control pressure (pB) or to the axle modulator control signal (SB).

10. Electronically controllable pneumatic brake system (100) according to claim 9, **characterized in that** the axle modulator (11) can only be pneumatically actuated by means of the axle modulator control pressure (pB) if electrical actuation by means of the axle modulator control signal (SA) is prevented.

11. Electronically controllable pneumatic brake system (100) according to any one of the preceding claims, **characterized in that** the brake system (100) is implemented as a dual-circuit brake system (100),
wherein for this purpose a first control valve (13) associated with a first brake circuit (A) and a second control valve (11) associated with a second brake circuit (B) are provided,
wherein both control valves (13) can both be electrically controlled by means of control signals (SA, SB) and also pneumatically by means of control pressures (pA, pB).

12. Electronically controllable pneumatic brake system (100) according to any one of the preceding claims, **characterized in that** the first brake valve (24) is implemented as a brake value transmitter and the brake value transmitter can output a first brake valve control pressure (pA1, pB1) that is proportional to the operation of the brake pedal by a driver for the at least one brake circuit (A, B) and/or can transmit an electrical actuation signal (S1) that is proportional thereto to the first control unit (110).

13. Electronically controllable pneumatic brake system (100) according to any one of the preceding claims, **characterized in that** the second brake valve (25, 25A, 25B) is a proportionality valve, which depending on an electrical demand signal (S2) outputs a second brake valve control pressure (pA2, pB2) that is proportional thereto.

14. Electronically controllable pneumatic brake system (100) according to Claim 13, **characterized in that** a 1-channel proportionality valve (25A, 25B) is provided in the second brake valve for each brake circuit (A, B), wherein each 1-channel proportionality valve (25A, 25B) outputs a second brake valve control pressure (pA2, pB2) to the respective brake circuit (A, B) or the second brake valve is implemented as a multi-channel proportionality valve (25), which outputs the second brake valve control pressures (pA2, pB2) for each brake circuit (A, B) pneumatically independently of each other.

15. Electronically controllable pneumatic brake system (100) according to Claim 13 or 14, **characterized in that** the second brake valve (25, 25A, 25B) is implemented as an axle modulator, in particular a 1-channel-axle modulator or a 2-channel axle modulator.

16. Electronically controllable pneumatic brake system (100) according to any one of the Claims 13 through 15, **characterized in that** the second brake valve, which is in particular embodied as a proportionality valve (25, 25A, 25B), is integrated within the at least one control valve (11, 13) of the at least one brake circuit (A, B) or in the first brake valve (24).

17. Electronically controllable pneumatic brake system (100) according to any one of the preceding claims, **characterized in that** the second brake valve (25, 25A, 25B) is implemented as a directional valve, in particular a 3/2-way valve, which can be actuated depending on an electrical demand signal (S2), in particular in a pulsed manner, for outputting the second brake valve control pressure (pA2, pB2).

18. Electronically controllable pneumatic brake system (100) according to any one of the preceding claims, **characterized in that** a second control unit (120) is provided in the electronically controllable pneumatic brake system (100) that is designed to specify the target vehicle deceleration (zSoll) and to actuate the second brake valve (25, 25A, 25B) electronically with a demand signal (S2) if electrical actuation of the at least one control valve (11, 13) is prevented to provide electronically-pneumatically controlled redundancy.

19. Electronically controllable pneumatic brake system (100) according to Claim 18, **characterized in that** the first brake valve (24) can be actuated electronically or electromechanically, for example by the first control unit (110) and/or the second control unit (120) to provide additional mechanical-pneumatic redundancy.

20. Electronically controllable pneumatic brake system (100) according to Claim 18 or 19, **characterized in that** the second control unit (120) is implemented as a controller for an autonomously controlled utility vehicle (200) and the second control unit (120) is connected to the first control unit (110) to transmit an XBR signal (SXBR) to specify the target vehicle deceleration (zSoll).

21. Electronically controllable pneumatic brake system (100) according to any one of Claims 18 through 20, **characterized in that** the second control unit (120) is integrated within the first control unit (110).

22. Electronically controllable pneumatic brake system (100) according to any one of the preceding claims, **characterized in that** additionally a trailer control valve (19) is provided, which can be controlled with a trailer control pressure (pT) specified by the first brake valve (24) and/or the second brake valve (25, 25A, 25B) to provide redundancy for a trailer vehicle.

23. Electronically controllable pneumatic brake system (100) according to any one of the preceding claims, **characterized in that** the brake system (100) is an ABS brake system or an EBS brake system.

24. Method for the electronic control of a pneumatic brake system according to any one of Claims 1 through 22, with at least the following steps:
- detecting whether there is a failure or a defect in the electronic actuation of the control valves (13, 11) of the at least one brake circuit (A, B), in particular a defect in the first control unit (110);
- actuation of the second brake valve (25) with the demand signal (S2) such that the second brake valve (25) outputs a second brake valve control pressure (pA2, pB2), so that in the pneumatic brake system (100) either the first brake valve control pressure (pA1, pB1) of the first brake valve (24) or the second brake valve control pressure (pA2, pB2) of the second brake valve (25) is output as a control pressure (pA, pB) to the at least one control valve (13, 11).

25. Vehicle (200), in particular a utility vehicle (200), with an electronically controlled pneumatic brake system (100) according to any one of the Claims 1 through 23, in particular suitable for carrying out a method according to Claim 24.

## Revendications

1. Système pneumatique de freinage (100) à commande électronique, présentant au moins :
un circuit de frein (A, B), des pressions de freinage (p1, p2, p3, p4) pouvant être établies indépendamment les unes des autres sur des freins de service (1, 2, 3, 4) du ou des circuits de frein (A, B), au moins une soupape de commande (13, 11) étant associée dans ce but au circuit ou aux circuits de frein (A, B),
la ou les soupapes de commande (13, 11) présentant une entrée électronique de commande (17, 12e) qui reçoit un signal électrique de commande (SA, SB) et une entrée pneumatique de commande (14, 12f) qui reçoit une pression de commande (pA, pB) et
la ou les soupapes de commande (13, 11) alimentant en pression de freinage (p1, p2, p3, p4) les freins de service (1, 2, 3, 4) du ou des circuits de frein (A, B) en fonction du signal de commande (SA, SB) ou de la pression de commande (pA, pB) par l'intermédiaire de raccordements de travail (15, 12b, 12c),
une première unité de commande (110) délivrant les signaux de commande (SA, SB) en fonction d'un ralentissement de consigne (zSoll) du véhicule en vue de la commande électrique de la ou des soupapes de commande (13, 11), le ralentissement de consigne (zSoll) du véhicule pouvant être prédéterminé par une première soupape de frein (24) et
la première soupape de frein (24) prescrivant une première pression de commande (pA1, pB1) de soupape de frein du ou des circuits de frein (A, B),
**caractérisé en ce que**
une deuxième soupape de frein (25) qui délivre une deuxième pression de commande (pA2, pB2) de soupape de frein est disposée dans le système pneumatique de freinage (100) de telle sorte que la première pression de commande (pA1, pB1) de soupape de frein de la première soupape de frein (24) et/ou la deuxième pression de commande (pA2, pB2) de soupape de frein de la deuxième soupape de frein (25) est délivrée comme pression de commande (pA, pB) dans la ou les soupapes de commande (13, 11) pour la commande pneumatique de la ou des soupapes de commande (13, 11), la deuxième soupape de frein (25) pouvant être commandée électroniquement si une commande électrique de la ou des soupapes de commande (11, 13) est empêchée, en vue de former une redondance électronique-pneumatique contrôlée.

2. Système pneumatique de freinage (100) à commande électronique selon la revendication 1, **caractérisé en ce que** la ou les soupapes de commande (13, 11) alimentent, en fonction du signal de commande (SA, SB) ou de la pression de commande (pA, pB), les freins de service (1, 2, 3, 4) du ou des circuits de frein (A, B) en une pression de freinage (p1, p2, p3, p4) proportionnelle au signal de commande (SA, SB) ou à la pression de commande (pA, pB).

3. Système pneumatique de freinage (100) à commande électronique selon les revendications 1 ou 2, **caractérisé en ce que** la ou les soupapes de commande (13, 11) présentent une soupape à plusieurs voies, en particulier une soupape à 3/2 voies qui peut être commandée par la première unité de commande (110), en particulier par impulsions, pour alimenter les freins de service (1, 2, 3, 4) en pression de freinage (p1, p2, p3, p4) .

4. Système pneumatique de freinage (100) à commande électronique selon l'une des revendications précédentes, **caractérisé en ce que** la première soupape de frein (24) et la deuxième soupape de frein (25) sont reliées par des conduits (22a, 22b, 22c, 22d) d'air comprimé à une ou plusieurs soupapes inverseuses (21A, 21B) pour la commande de la première pression de commande (pA1, pB1) de soupape de frein par la première soupape de frein (24) et la deuxième pression de commande (pA2, pB2) de soupape de frein par la deuxième soupape de frein (25) sur la ou les soupapes inverseuses (21A, 21B),
la ou les soupapes inverseuses (21A, 21B) étant reliées à l'entrée de commande pneumatique (14, 12f) de la ou des soupapes de commande (11, 13) et la ou les soupapes inverseuses (21A, 21B) transmet uniquement une pression de commande de soupape de frein sélectionnée, en particulier la plus élevée des pressions de commande (pA1, pA2, pB1, pB2) de soupape de frein commandées par les deux soupapes de frein (24, 25) en tant que pression de commande (pA, pB) à l'entrée de commande pneumatique (14, 12f) de la ou des soupapes de commande (11, 13) en vue de former une redondance.

5. Système pneumatique de freinage (100) à commande électronique selon la revendication 4, **caractérisé en ce que** la ou les soupapes inverseuses (21A, 21B) sont intégrées dans la ou les soupapes de commande (11, 13) du ou des circuits de frein (A, B) ou dans la première soupape de frein (24) ou la deuxième soupape de frein (25, 25A, 25B).

6. Système pneumatique de freinage (100) à commande électronique selon l'une des revendications 1 à 3, **caractérisé en ce que** la première soupape de frein (24) et la deuxième soupape de frein (25) sont reliées par des conduits (22a, 22b, 22c, 22d) d'air comprimé à une ou plusieurs pièces (121A, 121B) en T en vue de la commande de la première pression de commande (pA1, pB1) de soupape de frein par la première soupape de frein (24) et de la deuxième pression de commande (pA2, pB2) de soupape de frein par la deuxième soupape de frein (25) sur la ou les pièces (121A, 121B) en T,
la ou les pièces (121A, 121B) en T étant reliées à l'entrée de commande pneumatique (14, 12f) de la ou des soupapes de commande (11, 13) et la ou les pièces (121A, 121B) en T transmettant la somme (pSA, pSB) ou une valeur moyenne (MSA, MSB) des pressions de commande (pA1, pA2, pB1, pB2) de soupape de frein commandées par les deux soupapes de frein (24, 25) asservies dans le circuit de frein (A, B) concerné en tant que pression de commande (pA, pB) à l'entrée de commande pneumatique (14, 12f) de la ou des soupapes de commande (11, 13) en vue de former une redondance.

7. Système pneumatique de freinage (100) à commande électronique selon l'une des revendications précédentes, **caractérisé en ce que** la ou les soupapes de commande sont réalisées sous la forme d'une soupape (13) relais,
la soupape (13) relais présentant une première entrée de commande (14) de soupape relais qui reçoit une pression de commande (pA) de soupape relais, une deuxième entrée de commande (17) de soupape relais qui reçoit un signal de commande (SA) de soupape relais ainsi que des raccordements de travail (15) de soupape relais qui délivrent une pression de freinage (p1, p2) aux freins de service (1, 2), la pression de freinage (p1, p2) étant proportionnelle à la pression de commande (pA) de soupape relais ou au signal de commande (SA) de soupape relais.

8. Système pneumatique de freinage (100) à commande électronique selon la revendication 7, **caractérisé en ce que** la soupape relais (13) peut être commandée pneumatiquement uniquement par l'intermédiaire de la pression de commande (pA) de soupape relais si une commande électrique par l'intermédiaire du signal de commande (SA) de soupape relais est empêchée.

9. Système pneumatique de freinage (100) à commande électronique selon l'une des revendications précédentes, **caractérisé en ce que** la ou les soupapes de commande sont réalisées comme modulateur axial (11),
le modulateur axial (11) présentant une première entrée de commande (12e) de modulateur axial qui reçoit un signal (SB) de commande de modulateur axial, une deuxième entrée (12f) de modulateur axial qui reçoit une pression (pB) de commande de modulateur axial ainsi que des raccordements de travail (12b, 12c) de modulateur axial qui délivrent une pression de freinage (p3, p4) aux freins de service (3, 4), la pression de freinage (p3, p4) étant proportionnelle à la pression (pB) de commande de modulateur axial ou au signal (SB) de commande de modulateur axial.

10. Système pneumatique de freinage (100) à commande électronique selon la revendication 9, **caractérisé en ce que** le modulateur axial (11) peut être commandé pneumatiquement uniquement par l'intermédiaire de la pression (pB) de commande de modulateur axial lorsqu'une commande électrique par l'intermédiaire du signal (SA) de commande de modulateur axial est empêchée.

11. Système pneumatique de freinage (100) à commande électronique selon l'une des revendications précédentes, **caractérisé en ce que** le système de freinage (100) est réalisé sous la forme d'un système de freinage (100) à deux circuits,
une première soupape de commande (13) associée au premier circuit de frein (A) et une deuxième soupape de commande (11) associée au deuxième circuit de frein (B) étant prévues,
les deux soupapes de commande (13) pouvant être commandées aussi bien électriquement par l'intermédiaire de signaux de commande (SA, SB) que pneumatiquement par l'intermédiaire de pressions de commande (pA, pB).

12. Système pneumatique de freinage (100) à commande électronique selon l'une des revendications précédentes, **caractérisé en ce que** la première soupape de frein (24) est configurée sous la forme d'un émetteur de valeur de freinage et l'émetteur de valeur de freinage peut délivrer à la première unité de commande (110), pour le ou les circuits de frein (A, B), une première pression de commande (pA1, pB1) de soupape de frein proportionnelle à l'actionnement de la pédale de frein par le conducteur et/ou un signal électrique d'actionnement (S1) proportionnel à cet actionnement de la pédale de frein par le conducteur.

13. Système pneumatique de freinage (100) à commande électronique selon l'une des revendications précédentes, **caractérisé en ce que** la deuxième soupape de frein (25, 25A, 25B) est une soupape proportionnelle qui délivre en fonction d'un signal électrique de commande (S2) une deuxième pression de commande (pA2, pB2) de soupape de frein proportionnelle à ce signal.

14. Système pneumatique de freinage (100) à commande électronique selon la revendication 13, **caractérisé en ce que** dans la deuxième soupape de frein, une soupape proportionnelle (25A, 25B) à un canal est prévue pour chaque circuit de frein (A, B), chaque soupape proportionnelle (25A, 25B) à un canal délivrant une deuxième pression de commande (pA2, pB2) de soupape de frein au circuit de frein (A, B) concerné ou la deuxième soupape de frein étant réalisée sous la forme d'une soupape proportionnelle (25) à plusieurs canaux qui délivre pour chaque circuit de frein (A, B) les deuxièmes pressions de commande (pA2, pB2) de soupape de frein pneumatiquement indépendantes l'une de l'autre.

15. Système pneumatique de freinage (100) à commande électronique selon les revendications 13 ou 14, **caractérisé en ce que** la deuxième soupape de frein (25, 25A, 25B) est réalisée sous la forme d'un modulateur axial, en particulier un modulateur axial à un canal ou un modulateur axial à deux canaux.

16. Système pneumatique de freinage (100) à commande électronique selon l'une des revendications 13 à 15, **caractérisé en ce que** la deuxième soupape de frein, en particulier configurée comme soupape proportionnelle (25, 25A, 25B) est intégrée dans la ou les soupapes de commande (11, 13) du ou des circuits de frein (A, B) ou dans la première soupape de frein (24).

17. Système pneumatique de freinage (100) à commande électronique selon l'une des revendications précédentes, **caractérisé en ce que** la deuxième soupape de frein (25, 25A, 25B) est configurée sous la forme d'une soupape à plusieurs voies et en particulier d'une soupape à 3/2 voies qui peut être commandée en particulier de manière pulsée en fonction d'un signal électrique de demande (S2) en vue de délivrer la deuxième pression de commande (pA2, pB2) de soupape de frein.

18. Système pneumatique de freinage (100) à commande électronique selon l'une des revendications précédentes, **caractérisé en ce qu'**une deuxième unité de commande (120) configurée pour prescrire le ralentissement de consigne (zSoll) du véhicule, est prévue dans le système pneumatique de freinage (100) à commande électronique et pour commander la deuxième soupape de frein (25, 25A, 25B) électroniquement par un signal de demande (S2) lorsqu'une commande électrique de la ou des soupapes de commande (11, 13) est empêchée, en vue de former une redondance électronique-pneumatique contrôlée.

19. Système pneumatique de freinage (100) à commande électronique selon la revendication 18, **caractérisé en ce que** la première soupape de frein (24) peut être actionnée de manière électronique ou électromécanique, par exemple par la première unité de commande (110) et/ou la deuxième unité de commande (120), en vue de former une redondance mécanique-pneumatique supplémentaire.

20. Système pneumatique de freinage (100) à commande électronique selon les revendications 18 ou 19, **caractérisé en ce que** la deuxième unité de commande (120) est configurée comme commande pour véhicule utilitaire (200) commandé de manière autonome, la deuxième unité de commande (120) étant reliée à la première unité de commande (110) en vue de transmettre un signal XBR (SXBR) qui prescrit le ralentissement de consigne (zSoll) du véhicule.

21. Système pneumatique de freinage (100) à commande électronique selon l'une des revendications 18 à 20, **caractérisé en ce que** la deuxième unité de commande (120) est intégrée dans la première unité de commande (110) .

22. Système pneumatique de freinage (100) à commande électronique selon l'une des revendications précédentes, **caractérisé en ce qu'**il présente en supplément une soupape de commande (19) de remorque qui peut être commandée par une pression de commande (pT) de remorque prédéterminée par la première soupape de frein (24) et/ou la deuxième soupape de frein (25, 25A, 25B) en vue de former une redondance pour un véhicule remorqué.

23. Système pneumatique de freinage (100) à commande électronique selon l'une des revendications précédentes, **caractérisé en ce que** le système de freinage (100) est un système de freinage ABS ou un système de freinage EBS.

24. Procédé de commande électronique d'un système pneumatique de freinage selon l'une des revendications 1 à 22, le procédé présentant au moins les étapes suivantes qui consistent à :
- détecter si une panne ou un défaut prévaut dans la commande électronique des soupapes de commande (13, 11) du ou des circuits de frein (A, B), en particulier un défaut dans la première unité de commande (110),
- commander la deuxième soupape de frein (25) par le signal de demande (S2) de telle sorte que la deuxième soupape de frein (25) délivre une deuxième pression de commande (pA2, pB2) de soupape de frein de telle sorte que dans le système pneumatique de freinage (100) soit la première pression de commande (pA1, pB1) de soupape de frein de la première soupape de frein (24) soit la deuxième pression de commande (pA2, pB2) de soupape de frein de la deuxième soupape de frein (25) soit délivrée comme pression de commande (pA, pB) à la ou aux soupapes de commande (13, 11).

25. Véhicule (200), en particulier véhicule utilitaire (200), doté d'un système pneumatique de freinage (100) à commande électronique selon l'une des revendications 1 à 23 et convenant en particulier en vue de la mise en oeuvre d'un procédé selon la revendication 24.
